# EUROPÄISCHE PATENTSCHRIFT

(11) **EP 2 241 211 B1**
(45) Veröffentlichungstag und Bekanntmachung des Hinweises auf die Patenterteilung: **22.03.2017**
(21) Anmeldenummer: 09005294.5
(22) Anmeldetag: 14.04.2009
(51) Int. Cl.: A47B 13/06, F16B 12/52, A47B 87/00

(54) **Tischsystem**
Table system
Système de table

(43) Veröffentlichungstag der Anmeldung: 20.10.2010
(73) Patentinhaber: Haworth GmbH, 31848 Bad Münder (DE)
(72) Erfinder: Struppler, Andreas, 81541 München (DE)
(74) Vertreter: Fleck, Hermann-Josef

(56) Entgegenhaltungen:
- EP-A- 1 330 969
- WO-A-2008/079778
- DE-C1- 3 808 087
- DE-U1- 29 701 559

## Beschreibung

Die Erfindung bezieht sich auf ein Tischsystem mit einem eine längliche Tischplatte tragenden Tischgestell, das zwei unter den schmalseitigen Endflächen der Tischplatte angeordnete plattenartige Quertraversen und mindestens eine zwischen diesen sich erstreckende und mit ihnen verbundene Längstraverse sowie mindestens zwei an den Quertraversen angebrachte Tischbeine aufweist.

Ein Tischsystem dieser Art ist in der DE 38 08 087 C1 gezeigt. Bei diesem bekannten Tischsystem sind Eckbereiche eines Tisches so gestaltet, dass dieser an unterschiedliche Winkelformen anpassbar ist. Die Vorrichtung im Eckbereich weist dazu zwei umschlagsymmetrische gleiche Beschlagteile auf, die mit Eingriffselementen zur Halterung von Tragprofilen oder anderer Montageelemente ausgerüstet sind, wobei die Beschlagteile um eine der Längsachse des Standbeines entsprechende Achse in ihrer Winkelstellung zueinander veränderbar aneinander festlegbar sind. Die Tragprofile sind mit vertikal übereinander liegenden hohlen Koppelelementen versehen, in die angepasste Koppelgegenelemente zweier separater, miteinander verbindbarer Beschlagteile einsteckbar sind.

Die WO 2008/079778 A zeigt ein Tischsystem mit Quertraversen und Längstraverse, wobei Tischbeine unter den Quertraversen befestigt werden.

Auch die DE 297 01 559 U1 zeigt ein Tischsystem mit einem Tischgestell aus Quertraversen und Längstraversen, wobei unter den Quertraversen Tischbeine befestigbar sind und die Quertraversen an ihren schmalen Stirnseiten mit einem einseitig offenen Kanal für die Aufnahme eines Verkettungselements in Form eines recheckigen Flachstahlstabes für eine Tischverkettung versehen sind.

Ein weiteres Tischsystem ist in der DE 100 08 179 B4 angegeben. Bei diesem bekannten Tischsystem ist eine längliche rechteckförmige Tischplatte auf einem Tischgestell mit einem Rahmen aus zwei Quertraversen und zwei daran angebrachten Längstraversen sowie an den Quertraversen angebrachten Tischbeinen getragen. Zur Aufnahme und Befestigung der Tischbeine sind diese mit einem in ihrer Ummantelung eingebrachten Ausschnitt versehen, der an einen Endabschnitt einer zugeordneten Quertraverse angepasst ist, wobei die Tischbeine senkrecht zum Boden aufgestellt und mittels von oben eingeführter Schrauben befestigt sind. Zur Verkettung mehrerer Tische wird die mit einem rechteckförmigen, plattenartigen Mittelteil versehene Quertraverse über die Schmalseite eines Tisches hinaus versetzt und der auf diese Weise überstehende Teil der Quertraverse mit einer benachbarten Tischplatte verbunden, wobei im Übergangsbereich beider Tischplatten diese mittels eines Beinpaares abgestützt sind.

Auch bei einem in der DE 44 06 248 C2 gezeigten Tisch ist mittels plattenartiger Quertraversen und Längstraversen ein die Tischplatte tragender Tischrahmen gebildet, der mittels unter den Quertraversen oder den Längstraversen angebrachter Tischbeine abgestützt ist. Hierbei sind die Längstraversen stirnseitig entlang der Schmalseiten der Quertraversen angebracht.

Einen ähnlichen Tischaufbau zeigt auch die DE 197 25 045 C2. Die auf der Unterseite der plattenartigen Quertraversen angebrachten Tischbeine können hierbei auch A-förmig ausgerichtet sein.

Der Erfindung liegt die Aufgabe zugrunde, ein Tischsystem mit mindestens einem Tisch der eingangs genannten Art bereit zu stellen, das bei stabilem Aufbau andere Montagemöglichkeiten bietet.

Diese Aufgabe wird mit den Merkmalen des Anspruches 1 gelöst. Hierbei ist vorgesehen, dass die Quertraversen an ihren den Längsseiten der Tischplatte zugekehrten Stirnseiten in ihren Endabschnitten hohle oder zapfenförmige Koppelelemente zum Einstecken von Koppelstücken mit an die Koppelelemente angepassten komplementären zapfenförmigen oder hohlen Koppelgegenelementen aufweisen, und dass die Tischbeine über die Koppelstücke an den Quertraversen angebracht oder anbringbar sind. Über die so ausgeführten Quertraversen und Koppelstücke können die Tischbeine einfach und stabil an den Quertraversen angekoppelt werden. Eine stabile Ankopplung der Tischbeine wird dabei dadurch unterstützt, dass die Quertraversen an jedem Endabschnitt mindestens zwei sich in Längsrichtung der Quertraversen parallel zueinander erstreckende Koppelelemente und die Koppelstücke mindestens zwei zu diesen komplementäre Koppelgegenelemente aufweisen. Mit den Maßnahmen, dass die Quertraversen zumindest auf ihrer nach außen zum schmalseitigen Ende des Tisches gekehrten Längsseite zumindest abschnittsweise gerade verlaufen und dass der Abstand der Koppelelemente in Querrichtung der Quertraverse mindestens doppelt so groß ist wie der Abstand zwischen dem geraden Längsrand und dem benachbarten Koppelelement, ergibt sich eine einfache Verkettungsmöglichkeit mehrerer Tische bei einfacher Montage und stabilem Aufbau.

Zu einer einfachen, stabilen Montage tragen des Weiteren die Maßnahmen bei, dass die Koppelstücke einen sich in Verlängerung der Quertraversen unter der Tischplatte erstreckenden Befestigungsschenkel und einen gegenüber diesem rechtwinklig oder stumpfwinklig nach unten gerichteten Aufnahmeschenkel für einen oberen Beinabschnitt des Tischbeins aufweisen.

Bei Ausgestaltung mit A-förmig angeordneten Tischbeinen können diese mit ihren oberen Abschnitten dadurch in verringertem Abstand zueinander montiert werden, dass der Befestigungsschenkel der stumpfwinkligen Koppelstücke kürzer ist als der Befestigungsschenkel der rechtwinkligen Koppelstücke.

Weitere Variationsmöglichkeiten des Tischaufbaus ergeben sich dadurch, dass die Quertraversen zur Aufnahme und Befestigung eines Tischbeines auf ihrer Unterseite, insbesondere in zentraler Anordnung bezüglich der Längsrichtung der Quertraverse, ausgebildet sind.

Eine eindeutige, stabile Verbindung zwischen den Quertraversen und den Längstraversen wird dadurch erreicht, dass auf den einander zugewandten Längsseiten der Quertraversen eines Tischgestelles mindestens ein abnehmbarer oder angeformter Befestigungsansatz mit einer jeweiligen Befestigungsaufnahme angebracht ist, in der ein zugeordneter Endteil einer Längstraverse festgespannt oder festspannbar ist.

Weitere stabile, definierte Montagemöglichkeiten ergeben sich dadurch, dass an den einander zugewandten Längsseiten der Quertraversen und/oder den Befestigungsansätzen angepasste Zwischenteile angebracht oder anbringbar sind.

Eine stabile Tischanreihung bei einfachem Aufbau wird dadurch erhalten, dass mehrere Tische mit rechteckförmigen Tischplatten mit ihren Tischgestellen aneinander gekettet sind, wobei in die stirnseitigen Koppelelemente benachbarter Querbrücken aneinandergrenzender Tische ein den Übergang zwischen den einander zugekehrten Längsrändern der Querbrücken überbrückendes Koppelstück mit seinen Koppelgegenelementen eingesetzt ist und mit einem Tischbein unter dem Übergangsbereich der aneinander grenzenden Tischplatten verbunden ist.

Eine alternative Ausgestaltung für eine einfache, stabile Tischverkettung besteht darin, dass mehrere Tische mit rechteckförmigen Tischplatten mit ihren Tischgestellen aneinander gekettet sind, wobei auf der Unterseite benachbarter Querbrücken, den Übergang zwischen ihren einander zugekehrten Längsrändern überbrückend, mindestens jeweils ein Tischbein angeordnet und mit beiden benachbarten Querbrücken verbunden ist.

Ein Anwender kann sich verschiedene Tischaufbauten zusammenstellen und auch nachträglich variieren mit den Maßnahmen, dass zumindest mehrere Querbrücken, mehrere Koppelstücke, insbesondere in verschiedenen Ausführungen mit rechtwinkligen oder stumpfwinkligen Befestigungsschenkeln und Aufnahmeschenkeln, mehrere Tischbeine zur seitlichen oder zentralen Anbringung und mehrere Längstraversen vorhanden sind. Hierdurch ergeben sich auch Vorteile für die Lagerhaltung, da mit wenigen, unterschiedlichen Bauteilen vielfältige Aufbaumöglichkeiten von Tischen und Tischanordnungen erreicht sind.

Vorteilhafte weitere Ausgestaltungsvarianten des Tischsystems ergeben sich dadurch, dass mehrere Tische mit rechteckförmigen oder quadratischen Tischplatten mit ihren Tischgestellen in Querrichtung aneinander gekettet sind, wobei in die Stirnseiten in Querrichtung benachbarter Querbrücken ein Koppelstück ohne Bein-Aufnahmeschenkel den Spalt zwischen den benachbarten Tischen auf der Unterseite überbrückend eingesetzt ist, auf dessen Unterseite ein Tischbein im Spaltbereich befestigt ist, oder dass in der Stirnseite der Querbrücke des einen Tisches ein erstes Koppelstück mit langem Befestigungsschenkel und Aufnahmeschenkel für ein Tischbein und in der Stirnseite der Querbrücke des anderen Tisches ein Koppelstück ohne Aufnahmeschenkel eingesetzt ist, das mit dem ersten Koppelstück verbunden ist.

Weitere variable Erweiterungsmöglichkeiten des Tischsystems werden dadurch erhalten, dass eine Gruppe aus mindestens zwei in Querrichtung gekoppelten Tischen mit einer weiteren Gruppe aus mindestens zwei in Querrichtung gekoppelten Tischen in Längsrichtung mit ihren Tischgestellen verkettet sind.

Die Erfindung wird nachfolgend anhand von Ausführungsbeispielen unter Bezugnahme auf die Zeichnungen näher erläutert. Es zeigen:
- Fig. 1: einen Tisch mit Tischplatte und einem Tischgestell in einer ersten Ausführungsform in perspektivischer Ansicht von schräg oben,
- Fig. 2: eine Tischplatte nach Fig. 1 mit einer Quertraverse des Tischgestells in perspektivischer Ansicht von schräg oben,
- Fig. 3: eine Tischplatte mit einem auf der Unterseite angebrachten Rahmen des Tischgestells mit schmalseitigen Quertraversen und sich dazwischen erstreckenden zueinander parallelen Längstraversen in perspektivischer Ansicht von schräg unten,
- Fig. 4: den Rahmen nach Fig. 3 von schräg oben,
- Fig. 5: einen Abschnitt einer Tischplatte mit Rahmen und einem mit zusätzlichen Komponenten angebrachten rückseitigen Anbauteil von der Unterseite,
- Fig. 6: eine Tischplatte und Rahmenteile in Einzelelementdarstellung in perspektivischer Ansicht von schräg oben,
- Fig. 7: einen vergrößerten Ausschnitt der Darstellung nach Fig. 6 im Endbereich einer Tischplatte und des auseinander genommenen Rahmens,
- Fig. 8: ein Tischgestell mit einem Rahmen und vier Tischbeinen in perspektivischer Ansicht von oben,
- Fig. 9: einen Abschnitt des Tisches mit Tischplatte und Tischgestell in perspektivischer Ansicht von unten,
- Fig. 10: einen Abschnitt des Tisches mit Tischplatte und Tischgestell bei einem abgenommenem Koppelstück mit Tischbein,
- Fig. 11: zwei aneinander gekoppelte Tische in perspektivischer Ansicht von schräg oben,
- Fig. 12: verkettete Tischgestelle der aneinander gekoppelten Tische nach Fig. 11,
- Fig. 13: einen Ausschnitt von nebeneinander angeordneten Rahmenabschnitten zweier Tische,
- Fig. 14: einen Ausschnitt des Tischgestells nach Fig. 12 im Verkettungsbereich in perspektivischer Ansicht von schräg oben,
- Fig. 15: einen Ausschnitt des Tischgestelles nach Fig. 12 im Verkettungsbereich in perspektivischer Ansicht von schräg unten,
- Fig. 16: einen Ausschnitt des Tischgestelles nach Fig. 12 im Verkettungsbereich bei einem abgenommenen Koppelstück mit Tischbein in perspektivischer Ansicht von schräg oben,
- Fig. 17: einen Ausschnitt des Tischgestelles nach Fig. 12 im Verkettungsbereich bei einem abgenommenen Koppelstück mit Tischbein in perspektivischer Ansicht von schräg unten,
- Fig. 18: eine Tischplatte mit zur Längsseite versetzten Quertraversen in perspektivischer Ansicht von schräg oben,
- Fig. 19: eine Tischplatte mit zur Längsseite versetztem Rahmen in perspektivischer Ansicht von schräg unten,
- Fig. 20: ein weiteres Ausführungsbeispiel für einen Tisch mit Tischplatte und Tischgestell mit A-Anordnung der Tischbeine in perspektivischer Ansicht von schräg oben,
- Fig. 21: das Tischgestell nach Fig. 20 bei abgenommener Tischplatte,
- Fig. 22: einen Abschnitt des Tisches nach Fig. 20 in perspektivischer Ansicht von schräg unten,
- Fig. 23: einen Abschnitt des Tisches nach Fig. 20 in perspektivischer Ansicht von schräg unten bei einem abgenommenen Koppelstück mit Tischbein,
- Fig. 24: zwei aneinander gekoppelte Tische der Ausführungsform nach Fig. 20,
- Fig. 25: zwei miteinander verkettete Tischgestelle zusammengekoppelter Tische nach Fig. 24,
- Fig. 26: einen Ausschnitt des Tischgestells nach Fig. 25 im Verkettungsbereich,
- Fig. 27: einen Ausschnitt des Tischgestelles nach Fig. 26 im Verkettungsbereich bei einem abgenommenen Koppelstück mit Tischbein,
- Fig. 28: eine weitere Ausführungsform des Tisches mit Tischplatte und Tischgestell mit T-Anordnung der Tischbeine in perspektivischer Ansicht von schräg oben,
- Fig. 29: das Tischgestell der Ausführungsform des Tisches nach Fig. 28,
- Fig. 30: zwei aneinander gekoppelte Tische der Ausführungsform nach Fig. 28 in perspektivischer Ansicht von schräg oben,
- Fig. 31: zwei miteinander verkettete Tischgestelle der aneinander gekoppelten Tische nach Fig. 30,
- Fig. 32: einen Ausschnitt der aneinander gekoppelten Tische nach Fig. 30 im Verkettungsbereich der Tischgestelle in perspektivischer Ansicht von schräg unten,
- Fig. 33: ein Anbauteil des Tisches in perspektivischer Ansicht,
- Fig. 34: einen Ausschnitt eines Tisches mit Anbauteil nach Fig. 33 im rückwärtigen Bereich in perspektivischer Ansicht von schräg unten,
- Fig. 35: zwei miteinander in Querrichtung verkettete Tische in perspektivischer Ansicht von schräg oben,
- Fig. 36: die in Querrichtung verketteten Tische nach Fig. 35 in perspektivischer Ansicht von schräg unten,
- Fig. 37: zwei in Querrichtung miteinander verkettete Tischgestelle der verketteten Tische nach Fig. 35,
- Fig. 38: zwei in Querrichtung verkettete Tische mit A-Fußanordnung in perspektivischer Ansicht von schräg oben,
- Fig. 39: die in Querrichtung verketteten Tische nach Fig. 38 in perspektivischer Ansicht von schräg unten,
- Fig. 40: zwei in Querrichtung verkettete Tischgestelle mit A-Fußanordnung der verketteten Tische nach Fig. 38,
- Fig. 41: eine vergrößerte Darstellung des Verkettungsbereichs nach Fig. 39,
- Fig. 42: eine Tischanordnung mit zwei in Längsrichtung verketteten Gruppen aus jeweils zwei in Querrichtung verketteten Tischen in perspektivischer Ansicht von oben,
- Fig. 43: die Tischanordnung nach Fig. 42 in perspektivischer Ansicht von schräg unten,
- Fig. 44: die verketteten Tischgestelle der Tischanordnung nach Fig. 42 in perspektivischer Ansicht,
- Fig. 45: einen Ausschnitt der verketteten Tische nach Fig. 43 im mittleren Bereich,
- Fig. 46: eine weitere Tischanordnung mit zwei in Längsrichtung verketteten Gruppen von Tischen aus zwei in Querrichtung miteinander verketteten Tischen mit A-Fußanordnung in perspektivischer Ansicht von schräg oben,
- Fig. 47: die Tischanordnung nach Fig. 46 in perspektivischer Ansicht von schräg unten und
- Fig. 48: die verketteten Tischgestelle der Tischanordnung nach Fig. 46.

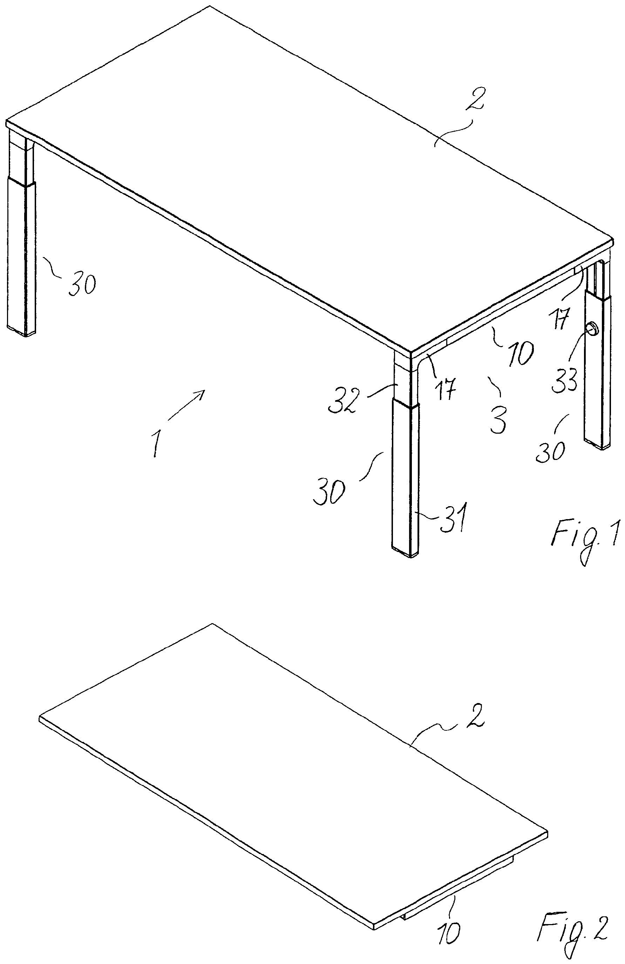

Fig.1 zeigt einen Tisch 1 eines Tischsystems mit einer auf einem Tischgestell 3 getragenen Tischplatte 2. Von dem Tischgestell 3 sind Tischbeine 30 mit jeweils einem unteren und oberen Beinabschnitt sowie eine Quertraverse 10 unter der Schmalseite der Tischplatte 2 in deren Endbereich und Koppelstücke 17 zwischen den oberen Beinabschnitten 32 und der Quertraverse 10 ersichtlich, wobei die Koppelstücke 17 mit einem Befestigungsschenkel stirnseitig an der Quertraverse 10 und mit rechtwinklig nach unten gerichteten Aufnahmeschenkeln im Bereich der oberen Stirnseiten der oberen Beinabschnitte 32 angebracht sind. Die oberen Beinabschnitte 32 sind in die hohl ausgebildeten unteren Beinabschnitte 31 gesteckt und in diesen teleskopartig geführt und in gewünschter Höhe mittels eines Spanngliedes 33 festlegbar, wobei das Spannglied 33 mit einem Spannbolzen durch eine Bohrung des unteren Beinabschnittes 31 und durch einen in Längsrichtung des oberen Beinabschnittes 32 verlaufenden Schlitz greift und mit einem in dem Innern des oberen Beinabschnittes 32 positionierten Spannelement zum Verspannen zusammenwirkt.

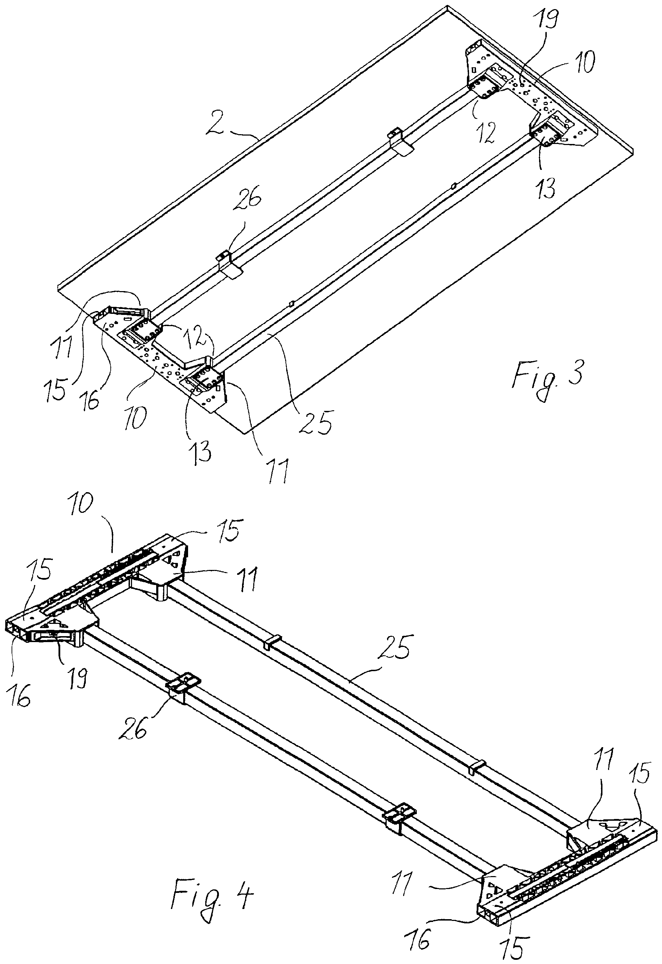

Die Fig. 2 und 3 zeigen die Tischplatte 2 mit einem darunter angeordneten Rahmen des Tischgestells 3, wobei in Fig. 2 lediglich eine Quertraverse 10 zu sehen ist, die eine geradlinig verlaufende äußere schmale Längsseite aufweist, welche mit der schmalen Stirnseite der rechteckförmigen Tischplatte 2 bündig abschließt, alternativ aber auch etwas nach innen bezüglich des Randes der Tischplatte versetzt sein kann. Wie Fig. 3 zeigt, sind unter beiden Schmalseiten der Tischplatte 2 derartige Quertraversen 10 spiegelsymmetrisch zueinander bezüglich einer Mittelquerebene des Tisches angeordnet. Auf den einander zugekehrten schmalen Längsrandseiten der Quertraversen 10 sind gegeneinander gerichtete Befestigungsansätze 11 einstückig angebracht oder lösbar angeschraubt, in denen Befestigungsaufnahmen 12 ausgebildet sind. Die Quertraversen 10 sind mit zwei parallel zueinander beabstandeten Längstraversen 25 verbunden, die mit ihren Endbereichen in die daran im Querschnitt angepassten Befestigungsaufnahmen 12 eingesetzt und mittels Befestigungsmitteln 13 verspannt sind, welche als Spannplatten ausgeführt und mit Schrauben befestigt sind. Die Befestigungsansätze 11 haben im Wesentlichen die Form eines ungleichschenkligen Trapezes, wobei die außen zu den Längsseiten der Tischplatte 2 hin liegenden Trapezschenkel beispielsweise einen Winkel von 45° zur Grundseite des Trapezes bilden. Mittels der Befestigungsansätze 11 ergibt sich eine stabile Festlegung der Längstraversen 25, wobei im Übrigen die im Wesentlichen plattenförmige Quertraverse 10 relativ schmal gehalten werden kann. Die Befestigungsaufnahmen 12 und die Längstraversen 25 sind vorliegend spiegelsymmetrisch zu einer Mittellängsebene der Tischplatte 12 angeordnet und bilden zusammen mit den Quertraversen 10 einen stabilen Rahmen, auf dessen Oberseite die Tischplatte 2 montiert ist, wozu laschenartige Verbindungselemente 26 vorgesehen sind. Die Tischplatte 2 lässt sich aber auch gegenüber dem aus den Quertraversen 10 und den Längstraversen 25 gebildeten Rahmen außermittig bezüglich der Mittellängsebene anordnen.

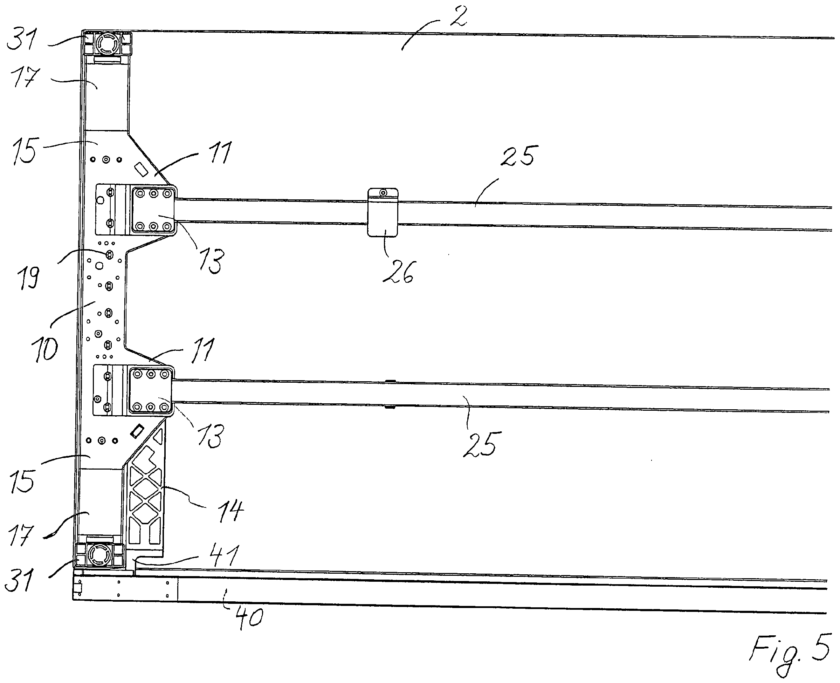

Wie in Verbindung mit Fig. 4 und den nachfolgenden Fig. 5, 6 und 7 näher ersichtlich, sind in den den beiden Längsseiten der Tischplatte 2 zugekehrten schmalen Stirnseiten der Quertraversen 10 in ihren Endabschnitten 15 Koppelelemente 16 angeordnet, die als hohle Koppelaufnahmen ausgebildet sind. Dabei sind pro Endabschnitt 15 zwei parallel zueinander in Längsrichtung der Quertraverse 10 verlaufende, voneinander beabstandete Koppelaufnahmen ausgebildet, um daran die Koppelstücke 17 festzulegen. Ferner ist die Querbrücke 10 mit mehreren senkrecht oder schräg zu ihrer unteren bzw. parallel dazu verlaufenden oberen Ebene eingebrachten Montagedurchbrüchen, insbesondere Bohrungen 19, versehen. Weitere Montagebohrungen sind in den außen liegenden Trapezschenkeln der Befestigungsansätze 11 parallel zur Flachseite der Quertraverse 10 angeordnet.

Wie aus Fig. 5 ersichtlich, kann die an dem äußeren Trapezschenkel gebildete schmale Randfläche der Quertraverse 10 zum stabilen Anbringen eines Zwischenteils 14 genutzt werden, das eine komplementäre schräge schmale Randebene gegebenenfalls mit vorspringender Zapfenstruktur aufweist und im Übrigen zur Längserstreckung der Quertraverse 10 parallel verlaufende Seiten besitzt und mit der kürzeren Längsseite an der zugekehrten Längsrandseite der Quertraverse 10 anliegt.

An dem Zwischenteil 14 ist über ein Halteelement 41 ein rückwärtiges Anbauteil 40 z. B. auf der Rückseite des Tisches entlang dem hinteren Längsrand der Tischplatte 2 angebracht.

Wie aus Fig. 5 weiter ersichtlich, ist die eine Längstraverse 25 an der Tischplatte über ein U-förmiges Verbindungselement in der Weise gehalten, dass das an der Unterseite der Tischplatte mit dem U-Steg angebrachte Verbindungselement mit seinen senkrecht von der Ebene der Tischplatte nach unten vorstehenden Schenkeln die Seiten der im Querschnitt quadratischen oder rechteckförmigen Längstraverse 25 umfasst, während das andere Verbindungselement Z-förmig ausgebildet ist und mit einem Endabschnitt an der Unterseite der Tischplatte 2 angebracht ist und mit seinem anderen Endabschnitt die Längstraverse 25 untergreift, während der Verbindungsabschnitt 26 mit seinem senkrecht zur Tischplatte ausgerichteten Zwischenabschnitt auf einer Seite der Längstraverse 26 anliegt. Auf diese Weise ist die Tischplatte mit mehreren solchen Verbindungselementen stabil auf dem Rahmen gehalten und kann andererseits leicht von diesem abgenommen werden und gegebenenfalls in anderer Position aufgelegt und montiert werden.

Ferner ist aus Fig. 5 auch die Anordnung der Tischbeine 30, von denen in Unteransicht die unteren Beinabschnitte 31 zu sehen sind, im Eckbereich der Tischplatte erkennbar, wobei die Koppelstücke 17 mit ihrem Befestigungsschenkel nach außen von der Quertraverse 10 vorstehen und die oberen Beinabschnitte 32 mit den Aufnahmeschenkeln der Koppelstücke 17 z. B. durch Einstecken und Verschrauben von oben oder von der Seite verbunden sind. Die Tischbeine 30 besitzen vorliegend rechteckförmigen Querschnitt.

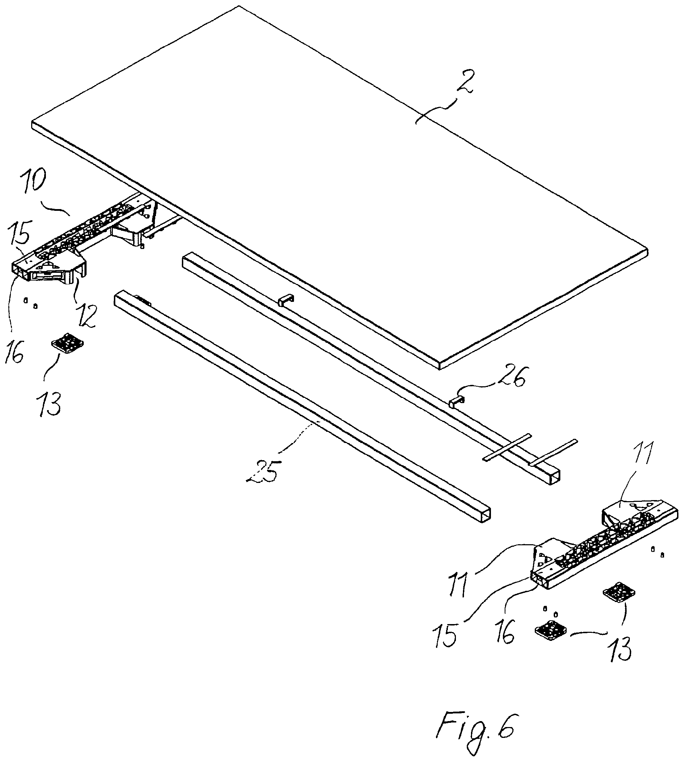

Die Explosionsdarstellung nach Fig. 6 zeigt die Tischplatte 2 und die Einzelteile des Rahmens mit den Quertraversen 10 und den Längstraversen 25. In den Quertraversen befinden sich die von unten offenen Befestigungsaufnahmen 12 für die Längstraversen 25, die mit ihren Endabschnitten mittels der plattenartigen Befestigungsmittel 13 festgespannt werden.

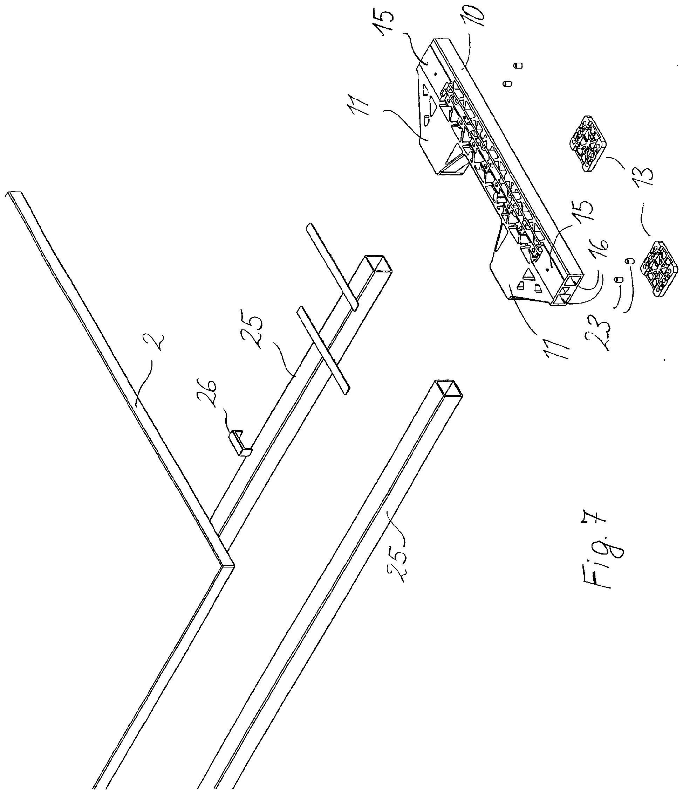

Auch sind die Endabschnitte 15 mit den Koppelelementen 16 in Form der hohlen Koppelaufnahmen zum Festlegen der Koppelstücke 17 ersichtlich. Insbesondere die Quertraverse 10 ist in der vergrößerten Darstellung nach Fig. 7 genauer ersichtlich.

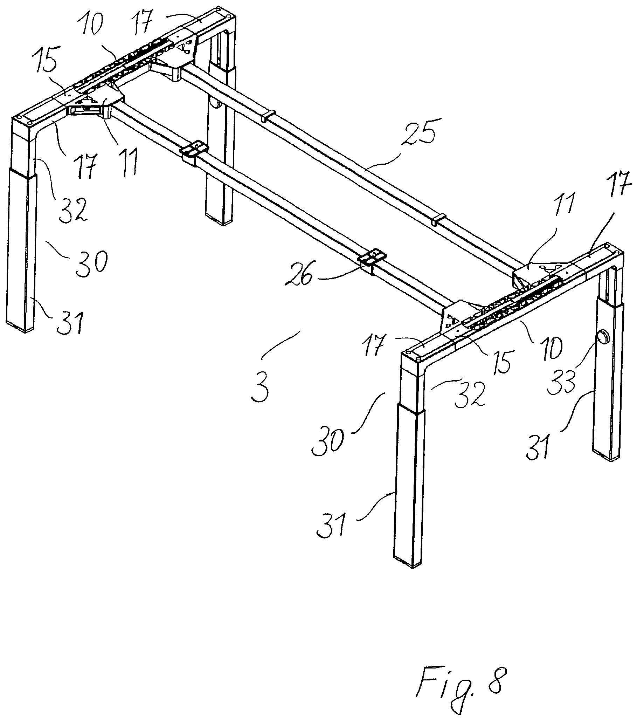

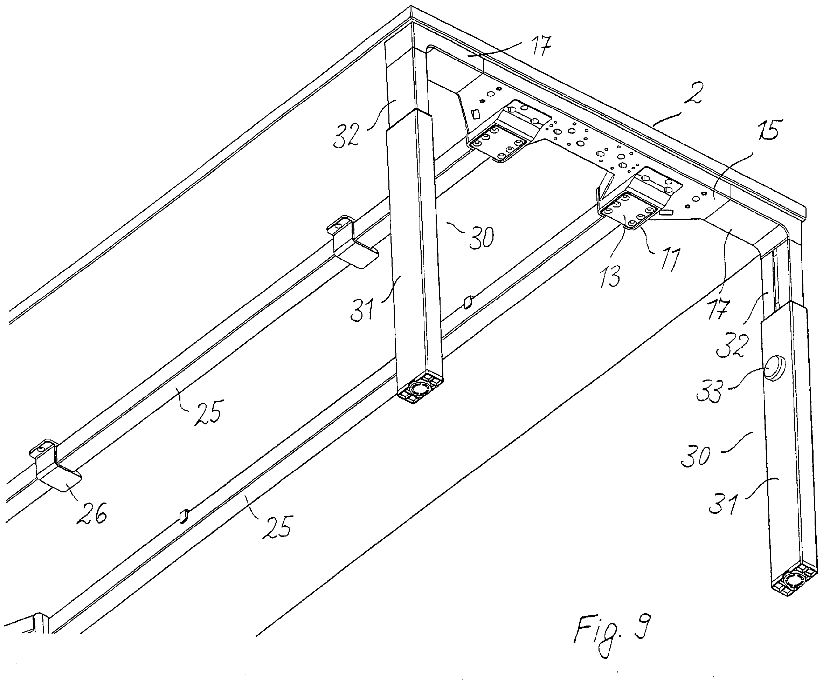

Fig. 8 zeigt das Tischgestell 3 mit den an dem Rahmen über die Koppelstücke 17 angebrachten Tischbeinen 30. Die Tischbeine 30 sind dabei mittels von oben in Richtung der Aufnahmeschenkel eingeführter, diese durchsetzender und in Gegengewinde in den oberen Beinabschnitten 32 eingreifender Schrauben festgelegt. Die Befestigungsschenkel der Koppelstücke 17 sind in Verlängerung der Endabschnitte 15 der Quertraversen 10 angebracht, wobei ihre obere Ebene bündig in Fortsetzung der oberen Ebene der Quertraverse 10 liegt. Die Verbindung der Tischbeine 30 mit der jeweiligen Quertraverse 10 ist in der vergrößerten Ausschnittdarstellung nach Fig. 9 näher ersichtlich.

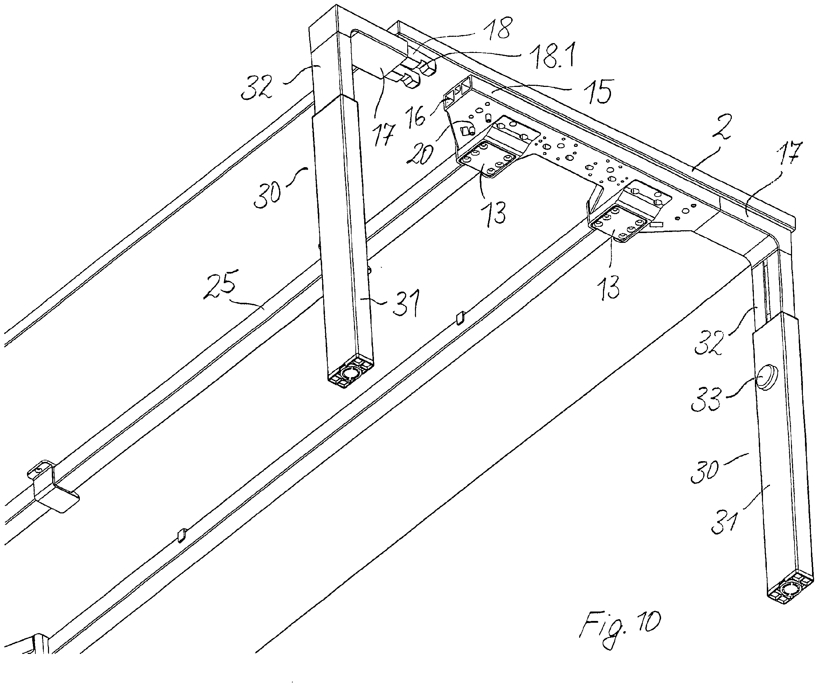

Fig. 10 zeigt ein von einer Quertraverse 10 abgenommenes Koppelstück 17 mit daran montiertem Tischbein 30. Das Koppelstück 17 weist an seiner den Koppelaufnahmen 16 zugekehrten Stirnseite 2 vorstehende, parallel zur Längserstreckung der Quertraverse 10 gerichtete, entsprechend den Koppelaufnahmen 16 voneinander beabstandete Koppelgegenelemente 18 in Form von Zapfen auf. Die Koppelaufnahmen 16 weisen eine im Querschnitt rechteckförmige oder quadratische Innenkontur auf, an die die Querschnittskontur der Koppelzapfen 18 angepasst ist, so dass sich ein genauer Sitz der Koppelzapfen 18 in den Koppelaufnahmen 16 ergibt, und zur Montage die Koppelzapfen 18 leicht in die Koppelaufnahmen 16 eingesetzt werden können.

Zum leichten Einführen sind die Stirnseiten der Koppelzapfen 18 konisch angeschrägt. Auf der der Tischplatte 2 gegenüberliegenden Unterseite sind die Koppelzapfen 18 mit Ausnehmungen 18.1 versehen, die zumindest an ihren einführseitigen Flanken schräg sich nach oben verjüngend geformt sind. Die Koppelstücke 17 können bis zum Ende der Koppelzapfen 18 in die Koppelaufnahmen 16 eingeführt werden und schlagen mit einem die Einführlänge begrenzenden Absatz an der betreffenden Stirnseite des Endabschnittes 15 der Quertraverse 10 an. In dieser Position sind in der unteren Wandung des Endabschnittes 15 Gewindebohrungen eingebracht, in die zum Sichern und Verspannen des Koppelstücks 17 Spannschrauben 20 eingedreht werden, welche in die Ausnehmungen 18.1 eingreifen. Zum festen Verspannen sind die einführseitigen Ränder der Spannschrauben 20 vorzugsweise ebenfalls etwas kegelförmig abgeschrägt und wirken mit den abgeschrägten vorderen Flanken der Ausnehmungen 18.1 zum festen Einziehen des Koppelstücks 17 und stabilen Verspannen zusammen, wobei sich die Stirnseite des Befestigungsschenkels des Koppelstücks 17 an der Stirnseite des Endabschnittes 15 der Quertraverse 10 abstützt.

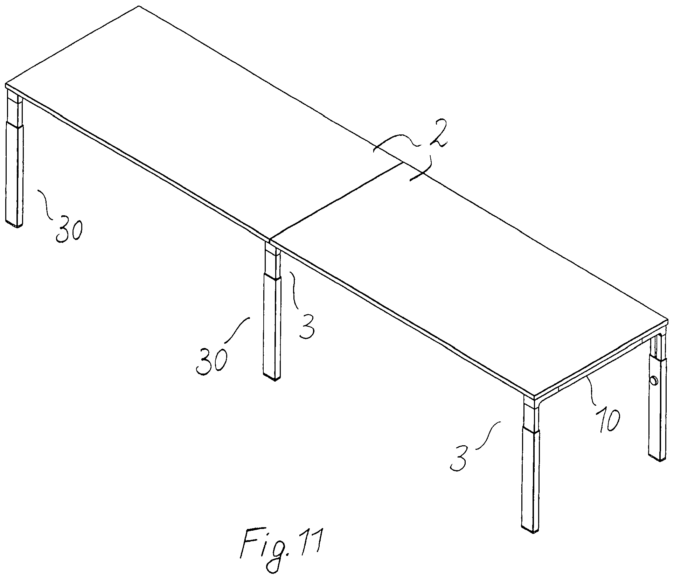

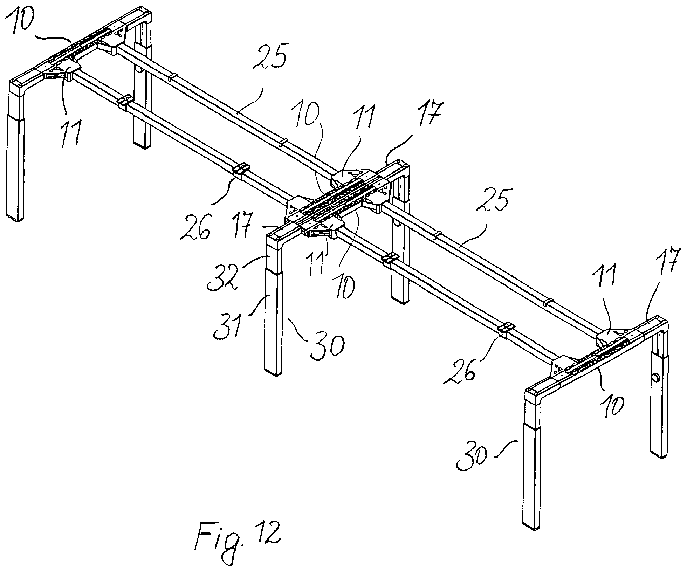

Fig. 11 zeigt eine Aneinanderkopplung zweier Tische 1. Im Übergangsbereich der beiden Tische ist, die Trennfuge mit ihrer Oberseite überspannend, ein Beinpaar mit einem auf der Vorderseite und einem auf der Rückseite der Tische angeordneten Tischbein 30 positioniert. Wie Fig. 12 zeigt, greift dabei das Koppelstück 17 jeweils mit einem Zapfen in eine dem jeweiligen schmalseitigen Rand des Tisches benachbarte Koppelaufnahme 16 der nebeneinander angeordneten Quertraversen 10 der beiden Tische ein. Um diese Koppelfunktion zu erreichen, ist die dem schmalseitigen Rand des Tisches zugekehrte Koppelaufnahme 16 der jeweiligen Quertraverse 10 von deren benachbarten äußeren Rand höchstens halb so weit entfernt wie der Abstand zwischen den beiden Koppelaufnahmen 16 einer Quertraverse 10. Bei geringerem Abstand zum äußeren Rand können die Quertraversen 10 mit ihrem äußeren Längsrand etwas vom benachbarten schmalen Rand der Tischplatte 2 nach innen zurückversetzt sein, um einen exakten Eingriff der Koppelzapfen 18 in die Koppelaufnahmen 16 zu erreichen.

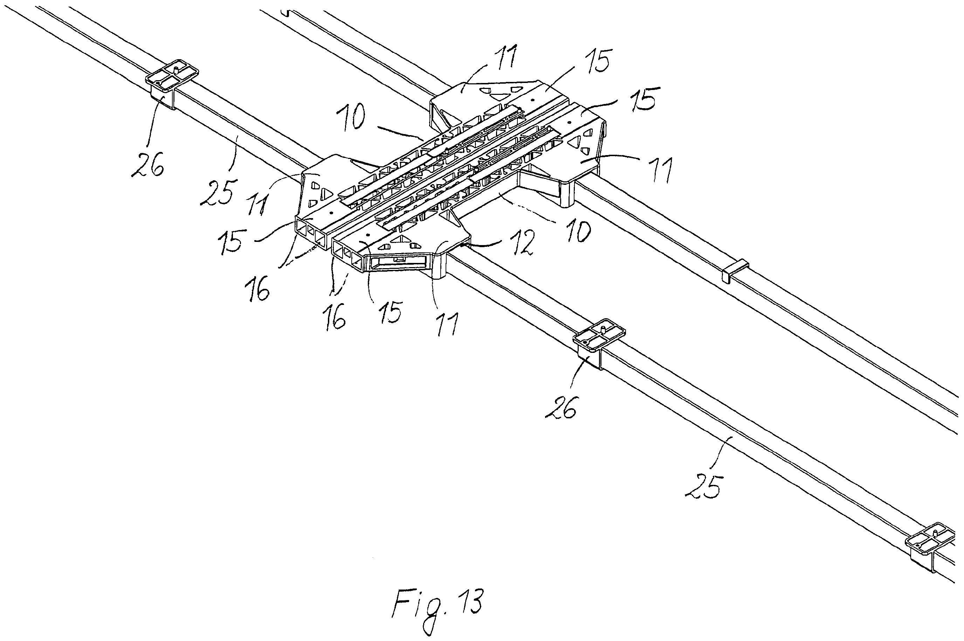

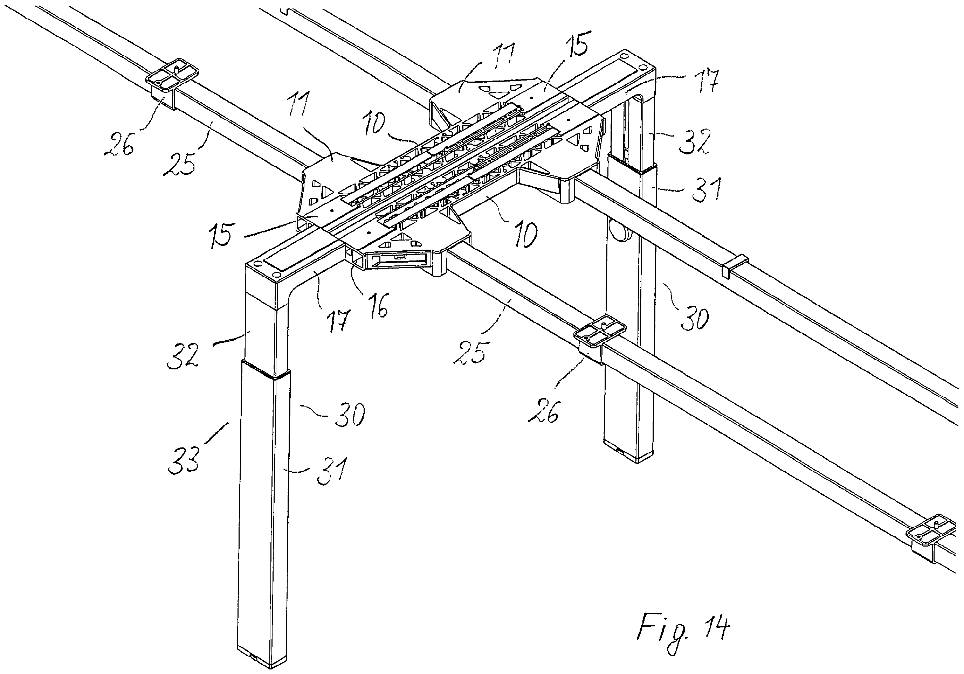

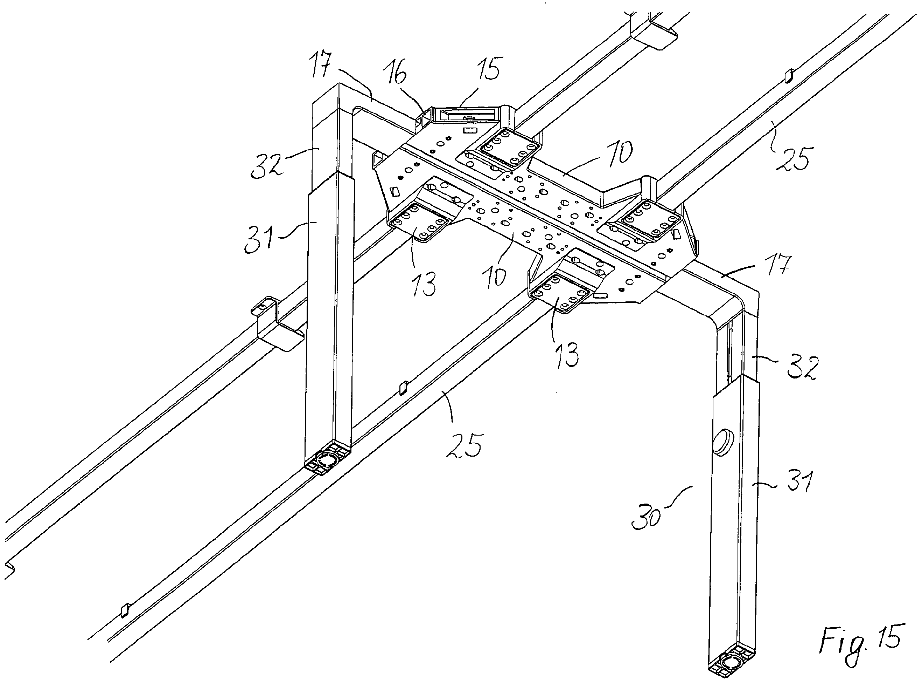

In Fig. 13, die zwei Rahmenabschnitte nebeneinander liegender Tische zeigt, sind diese Zusammenhänge genauer ersichtlich, wie auch in den Fig. 14 und 15, die angekoppelte Koppelstücke 17 bei einer Verkettung zweier Tischgestelle 3 zeigen.

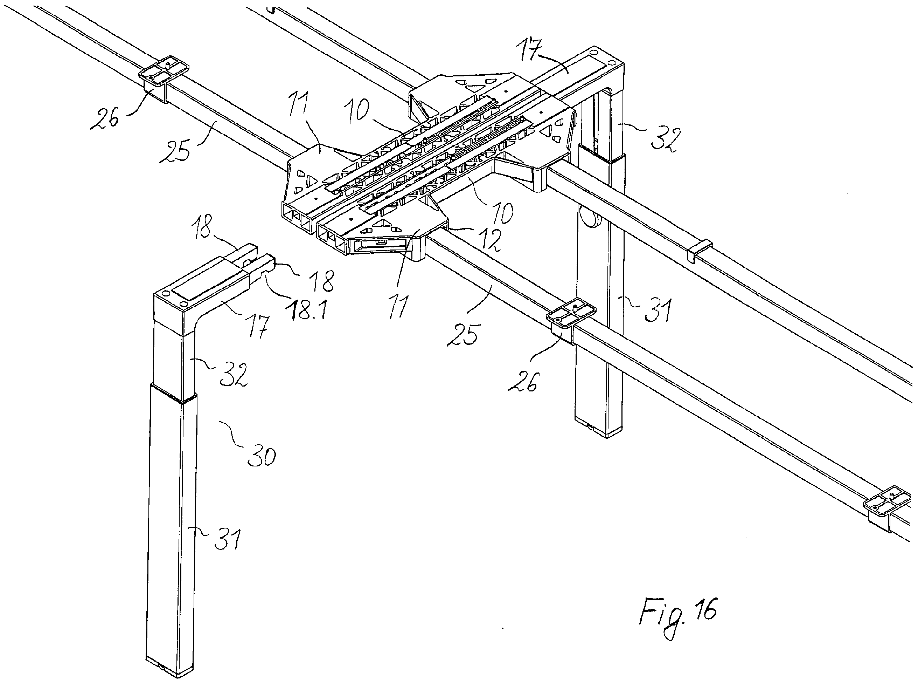

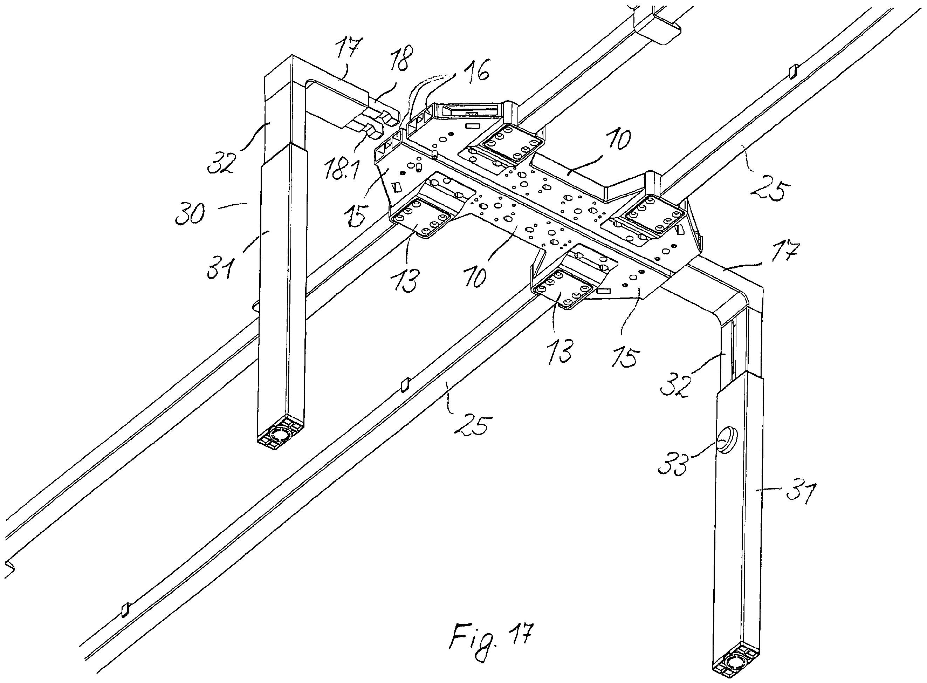

Fig. 16 zeigt dabei ein abgenommenes Koppelstück 17, das mit seinen Koppelzapfen 18 in die benachbarten Koppelaufnahmen 16 zweier nebeneinander liegender Quertraversen 10 eingesteckt wird, in einer perspektivischen Aufnahme von schräg oben, während Fig. 17 diese Situation in einer perspektivischen Darstellung von schräg unten zeigt.

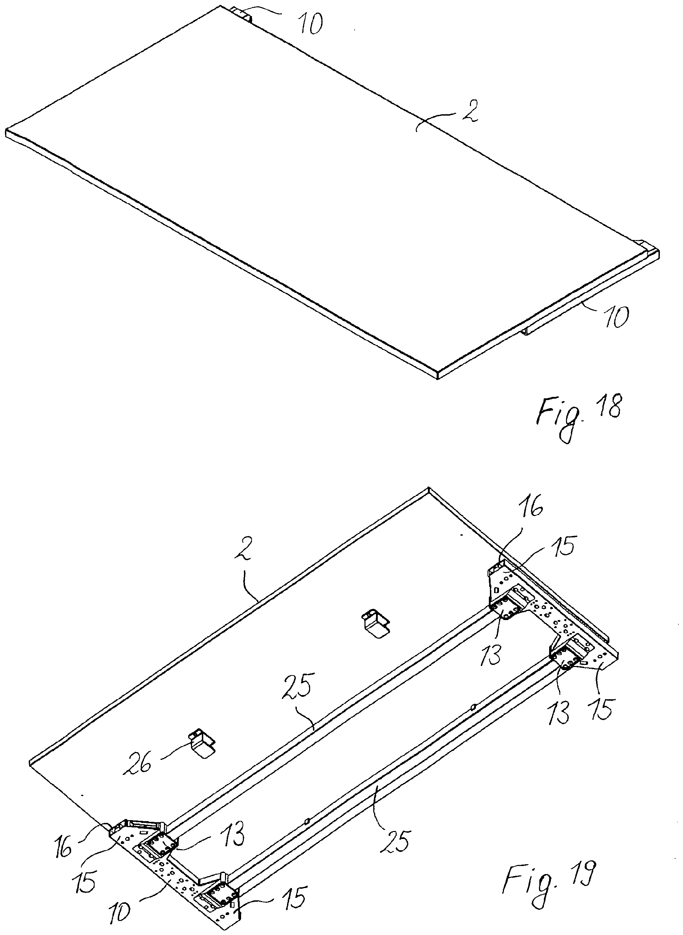

Die Fig. 18 und 19 zeigen eine auf einem Rahmen montierte Tischplatte 2, wobei der Rahmen bezüglich der Mittellängsebene zu einer Längsseite der Tischplatte hin versetzt ist und die beiden Quertraversen 10 über den einen Längsrand der Tischplatte 2 hinausragen. Auf diese Weise kann auf dem Endabschnitt 15 der Quertraversen 10 z. B. ein Anbauteil 40 aufgesetzt und befestigt werden.

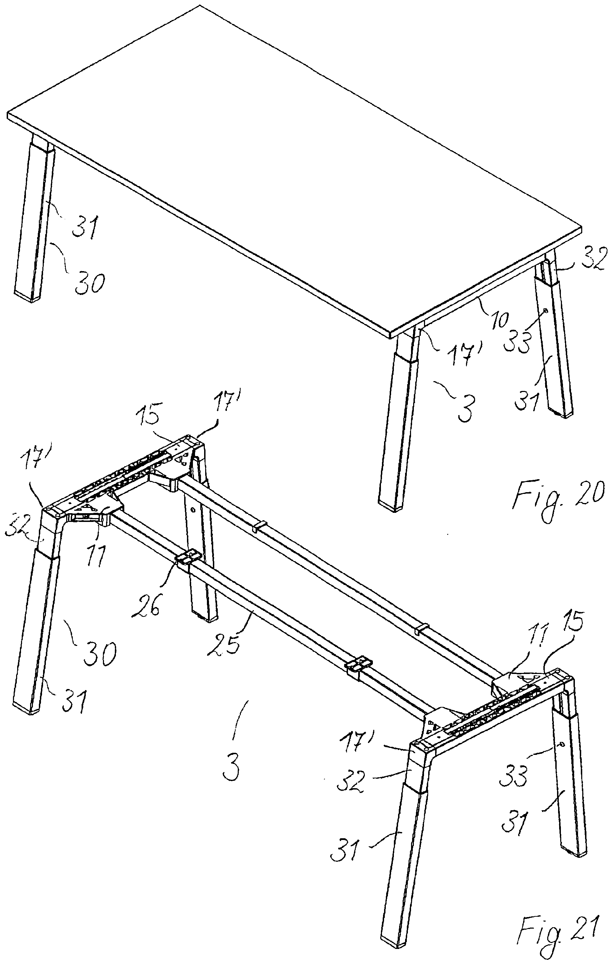

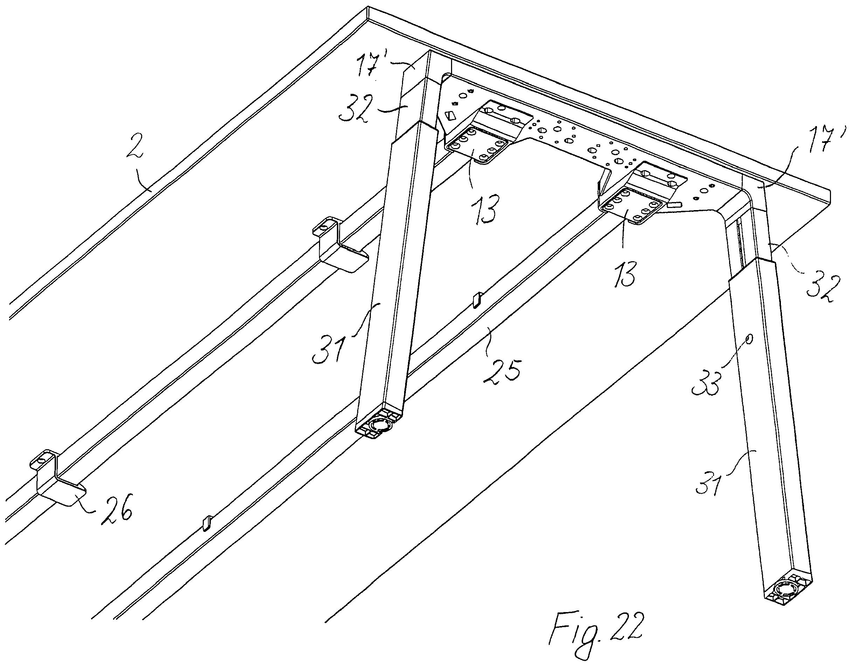

Die Fig. 20 bis 27 zeigen eine andere Ausführungsvariante des Tischsystems mit einem Tisch 1, dessen Tischgestell eine A-Anordnung der Tischbeine 30 aufweist. Der Tischrahmen ist hierbei gleich ausgebildet wie bei dem zuvor beschriebenen Ausführungsbeispiel. Jedoch sind anders ausgebildete Koppelstücke 17' in die Endabschnitte 15 der Quertraversen 10 eingesetzt, wie die Fig. 20 und 21 erkennen lassen. Das Koppelstück 17' weist dabei einen gegenüber dem ersten Ausführungsbeispiel verkürzten Befestigungsschenkel und einen an diesem stumpfwinklig angebrachten Aufnahmeschenkel auf. Durch den stumpfen Winkel ergibt sich eine entsprechend schräge Ausrichtung der Tischbeine 30, wobei dieselben Tischbeine verwendet werden können, wie bei dem ersten Ausführungsbeispiel. Lediglich die Koppelstücke 17' sind unterschiedlich. Auch hierbei werden die oberen Beinabschnitte 32 z. B. mittels von oben in Richtung der Aufnahmeschenkel durch Bohrungen eingeführter und in Gegengewinde in den oberen Beinabschnitten 32 eingreifender Schrauben befestigt. Der Aufbau des Rahmens mit den Quertraversen 10 und den daran festgelegten Längstraversen 25 entspricht dem vorherigen Ausführungsbeispiel. Durch die verkürzten Befestigungsschenkel sind bei gegenüber der Tischbreite geringerer Länge der Quertraversen 10 einschließlich der Befestigungsschenkel die oberen Beinabschnitte 32 bei symmetrischer Anordnung bezüglich der Mittellängsebene des Tisches gegenüber den Längsrändern der Tischplatte 1 nach innen versetzt. Dabei kann der Versatz von den Längsrändern des Tisches in Abstimmung auf den stumpfen Winkel der Aufnahmeschenkel bezüglich der Befestigungsschenkel so gewählt werden, dass die unteren Enden der unteren Beinabschnitte 31 nicht über die Projektion des Längsrandes der Tischplatte auf dem Boden hinausragen.

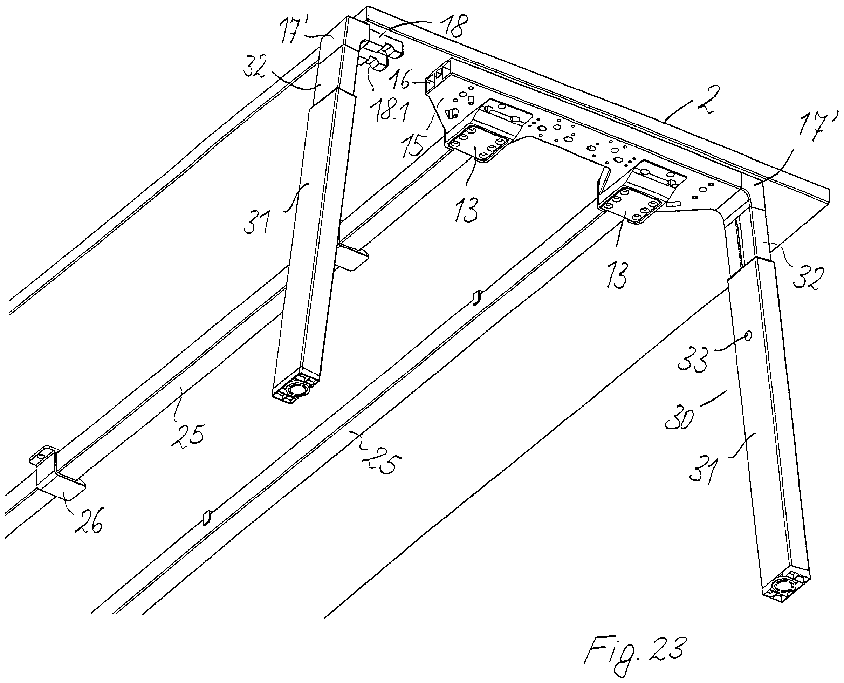

Wie Fig. 23 zeigt, entsprechen die Koppelgegenelemente 18 den Koppelzapfen bei dem ersten Ausführungsbeispiel und werden genauso in die Koppelaufnahmen 16 eingesteckt und an dem Endabschnitt 15 der Quertraversen 10 montiert.

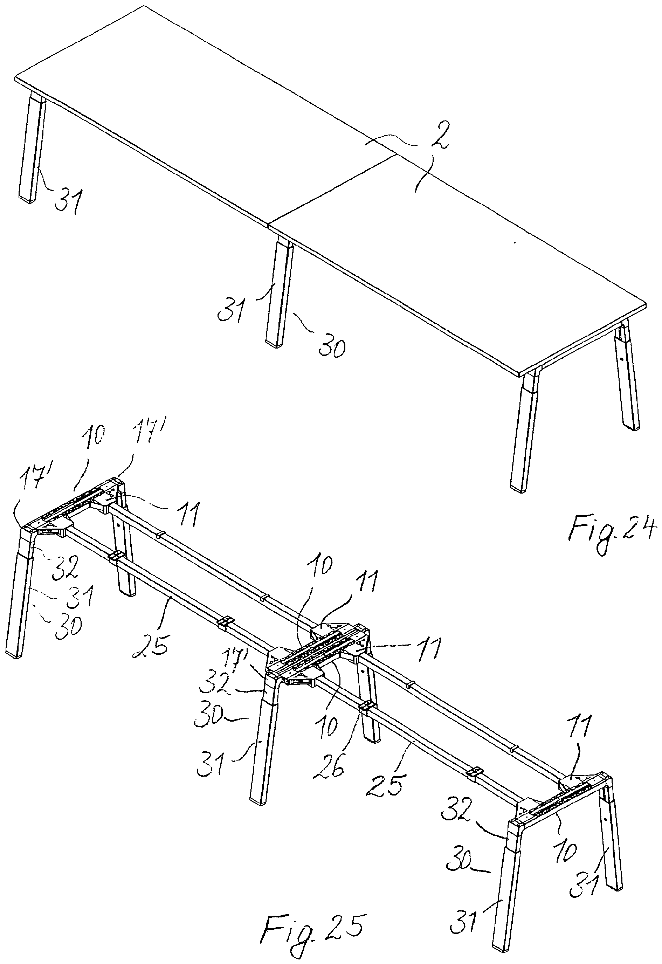

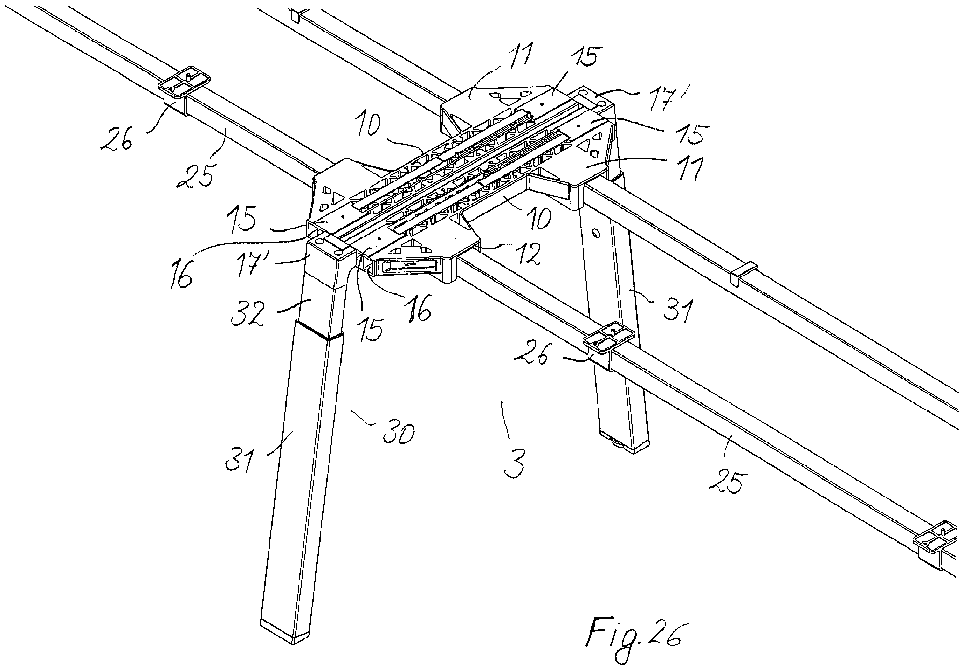

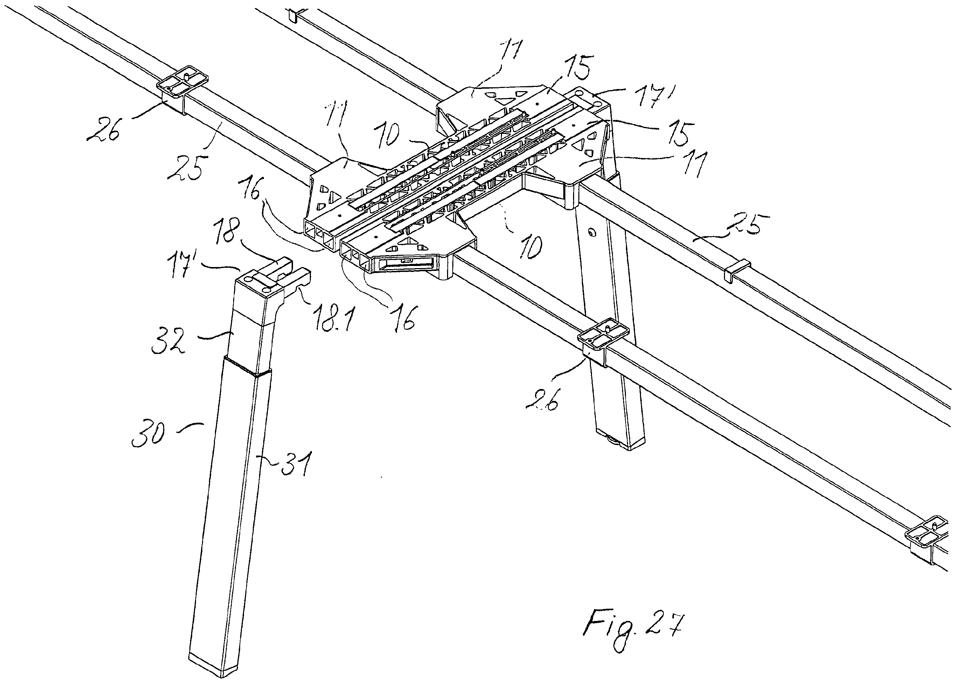

Auch die Kopplung mehrerer Tische 1 erfolgt in entsprechender Weise wie bei dem ersten Ausführungsbeispiel, wie die Fig. 24 und 25 sowie in vergrößerter Darstellung die Fig. 26 und 27 zeigen. Lediglich die Koppelstücke 17' sind anstelle der Koppelstücke 17 bei dem ersten Ausführungsbeispiel eingesetzt.

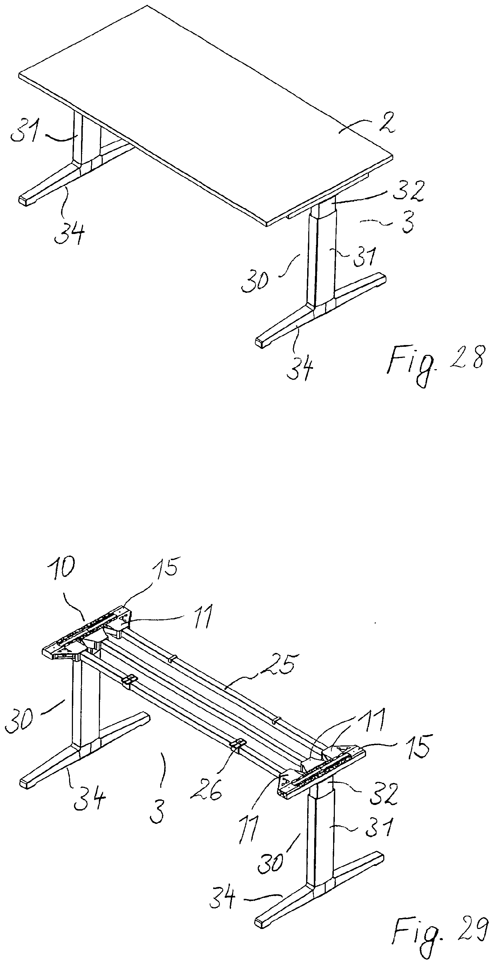

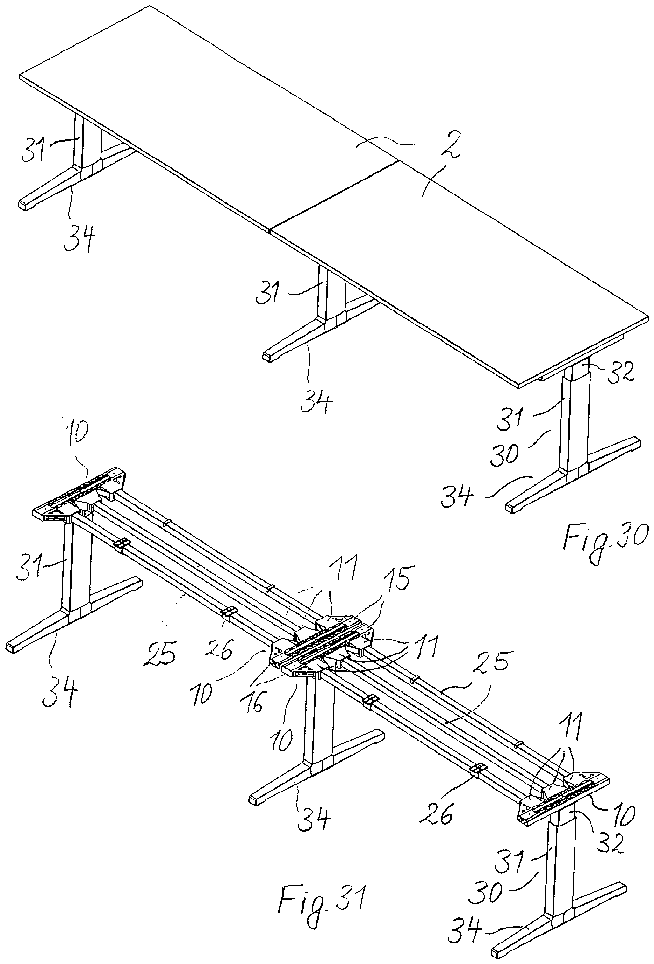

Die Fig. 28 bis 32 zeigen ein weiteres Ausführungsbeispiel des Tischsystems mit einem Tisch 1, wobei das die Tischplatte 2 tragende Tischgestell 3 mit einer beiderseitigen T-Anordnung der Tischbeine 30 versehen ist. Die Tischbeine 30 sind dabei mittels eines T-Fußes 34 auf dem Boden aufgestellt und können ebenfalls höhenverstellbar mit einem teleskopartig in einem unteren Tischbein 31 geführten oberen Tischbein 32 ausgebildet sein. Der obere Beinabschnitt 32 ist mit seiner oberen Stirnseite an der Unterseite der Quertraverse 10 abgestützt und über Montagebohrungen 19 und durch die Quertraverse 10 geführter Schrauben mit dieser verbunden. Zur Stabilisierung des Tischgestells 3 kann eine weitere Längstraverse 25 zentral zwischen den beiden äußeren Längstraversen 25 gemäß den vorhergehenden Ausführungsbeispielen zusätzlich eingesetzt werden. Hierzu ist zwischen den beiden Befestigungsansätzen 11 gemäß den vorhergehenden beiden Ausführungsbeispielen ein zusätzlicher Befestigungsansatz 11 angebracht, z. B. an dem geraden Randabschnitt der einander zugekehrten Ränder der Quertraversen 10 angeschraubt. Die Befestigung der zusätzlichen Längstraverse 25 erfolgt in entsprechender Weise wie die beiden anderen Längstraversen 25 in Befestigungsaufnahmen 12 der zusätzlichen Befestigungsansätze 11. In die Koppelaufnahmen 16 können mit Zapfen versehene Blenden eingesetzt werden.

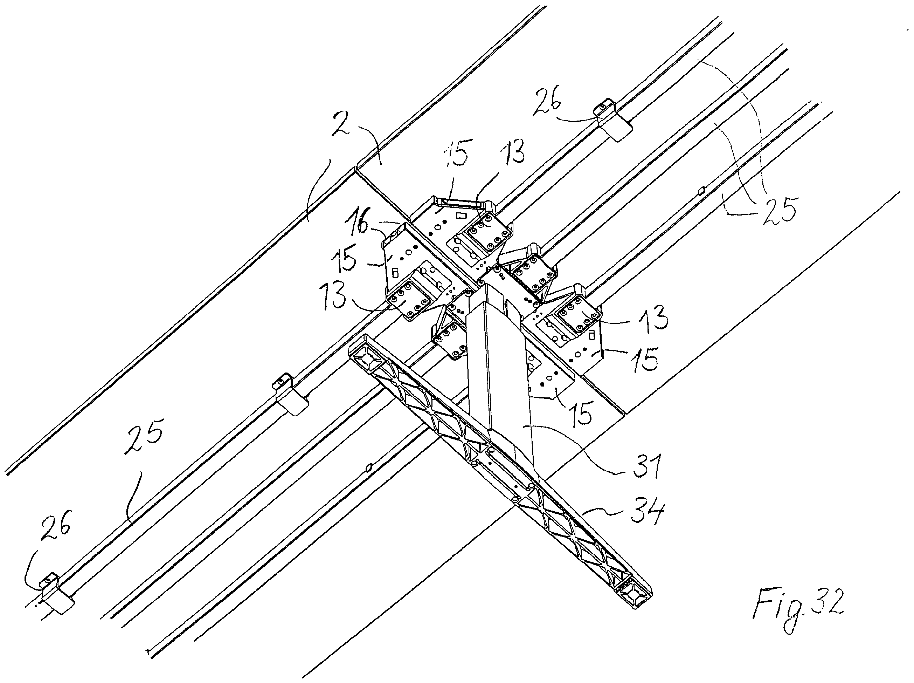

Zur Verkettung aneinander gekoppelter Tische 1 mit T-Fuß werden zwei benachbarte Quertraversen 10 mittels der oberen Stirnseite eines Tischbeines 30, die zusätzlich mit einer Koppelplatte ausgerüstet sein kann (vgl. Fig. 32), miteinander verbunden, wobei die obere Stirnseite bzw. die Koppelplatte den Übergangsbereich zwischen den beiden Quertraversen 10 überspannt. Die Festlegung des mittleren Tischbeines 30 erfolgt auch hierbei über Montagebohrungen 19 und Spannschrauben, wie Fig. 32 genauer erkennen lässt.

Eine weitere (nicht gezeigte) Alternative eines Tischaufbaus ist ein Tisch mit C-FußAnordnung.

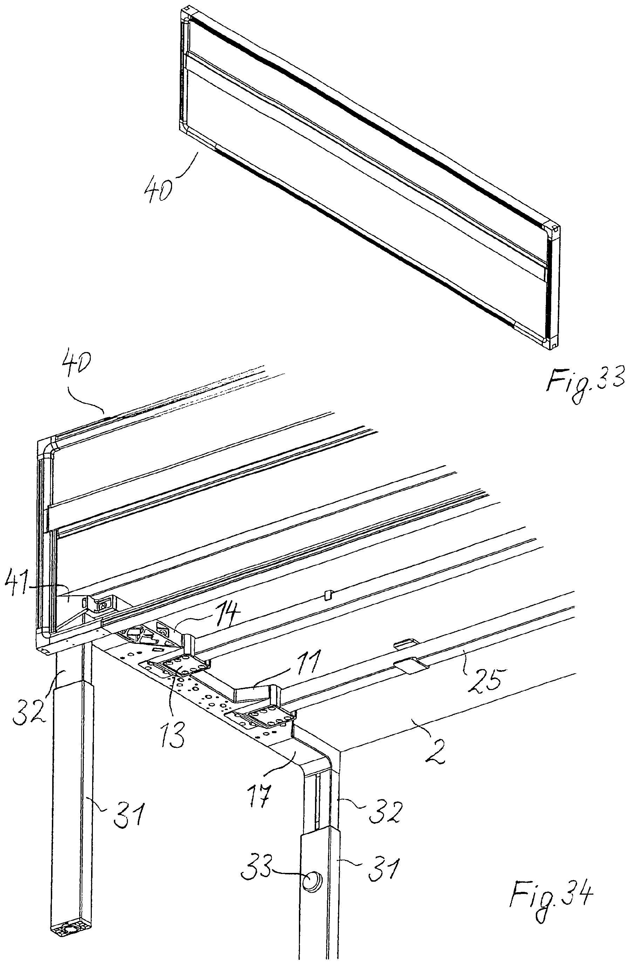

Die Fig. 33 und 34 zeigen die Ankopplung eines Anbauteils 40, das z. B. an der Rückseite hinter dem Längsrand der Tischplatte 2 senkrecht nach oben vorstehend angeordnet und über das Halteelement und das Zwischenteil 14 an den Quertraversen 10 angebracht ist.

Bei alternativer Ausgestaltung können die Koppelelemente 16 auch als Zapfen und die Koppelgegenelemente 18 als Aufnahmen in den Koppelstücken 17 bzw. 17' ausgeführt sein. Auch unterschiedliche Beinformen können vorgesehen sein.

Die Quertraverse 10 bildet ein zentrales Montageelement des Tischsystems und ist stets gleich ausgebildet. Mit wenigen verschiedenen Einzelteilen wird ein Bausatz für verschiedene Tische gebildet, mit dem ein Anwender unterschiedliche Tische mit verschiedener Beinanordnung aufbauen kann und mehrere Tische schnell und einfach verketten kann, wobei an den Quertraversen 10 nicht nur unterschiedliche Beinkonfigurationen, sondern auch unterschiedliche Anbauteile 40 einfach anbringbar sind.

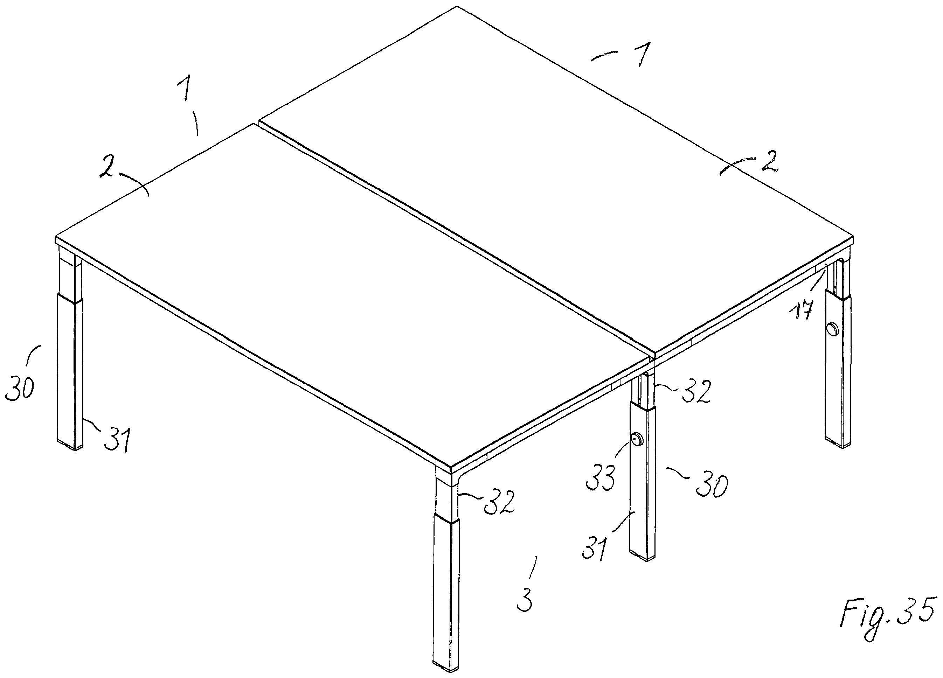

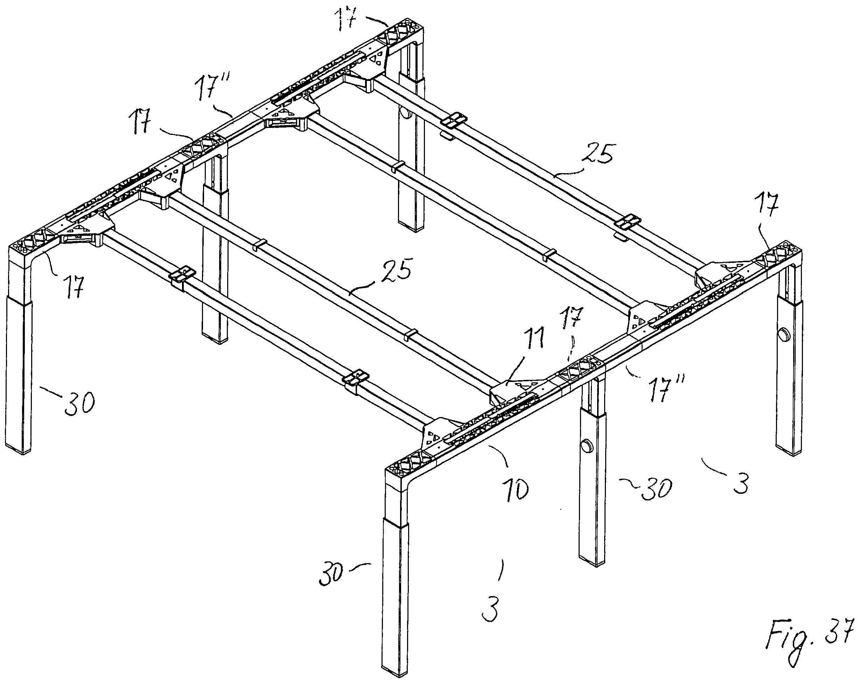

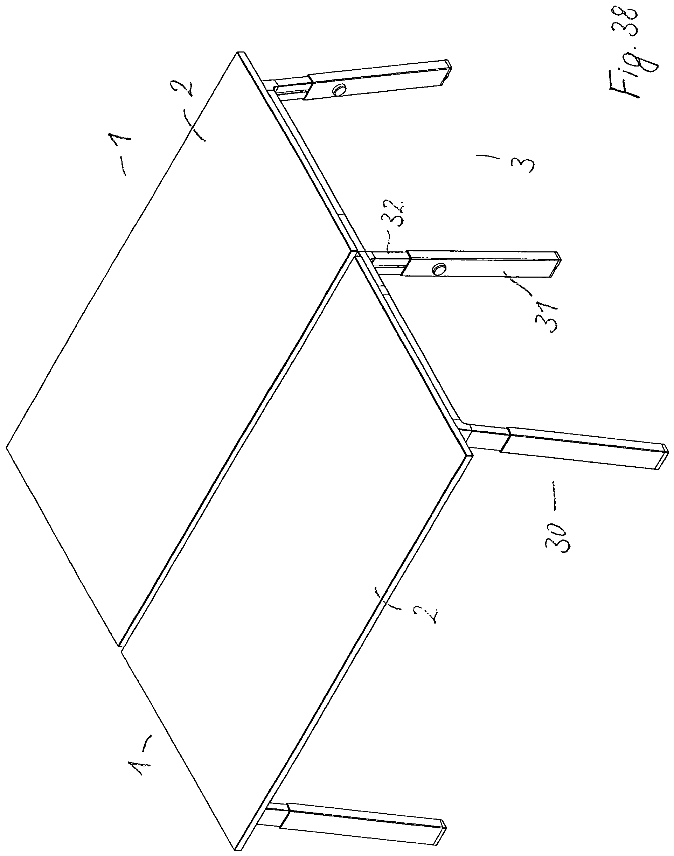

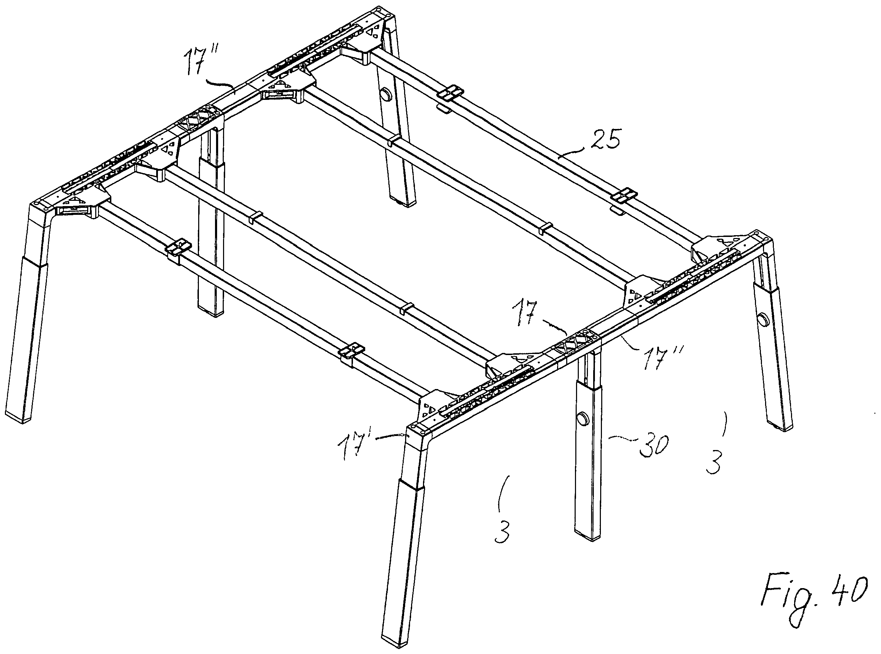

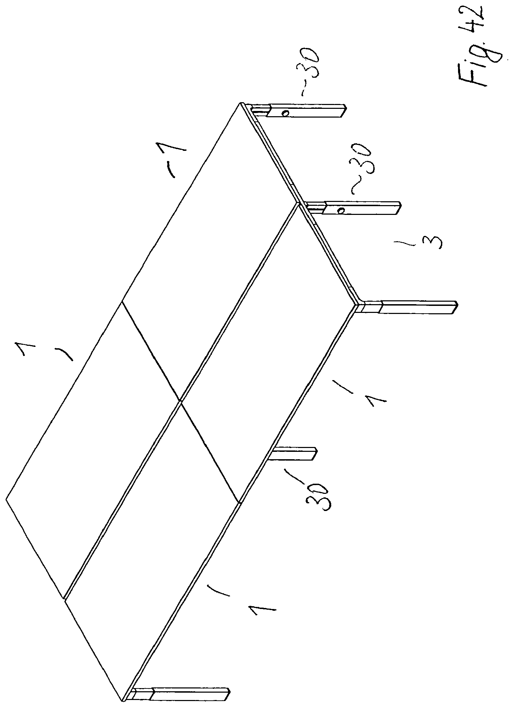

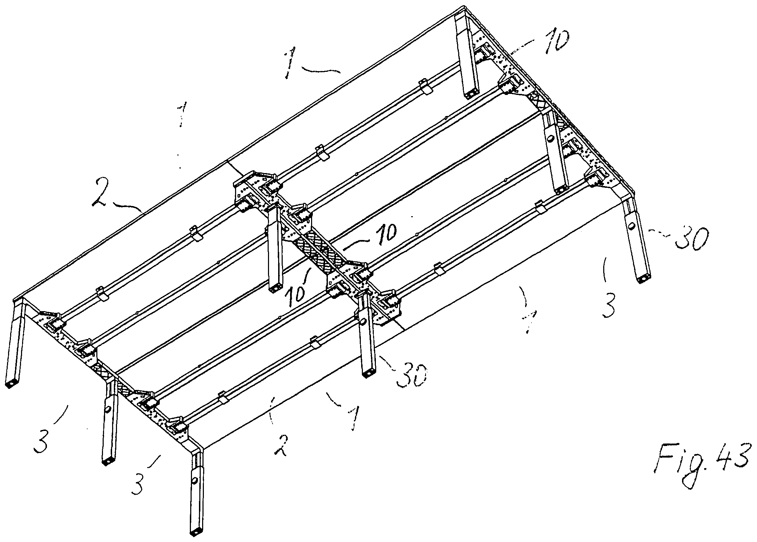

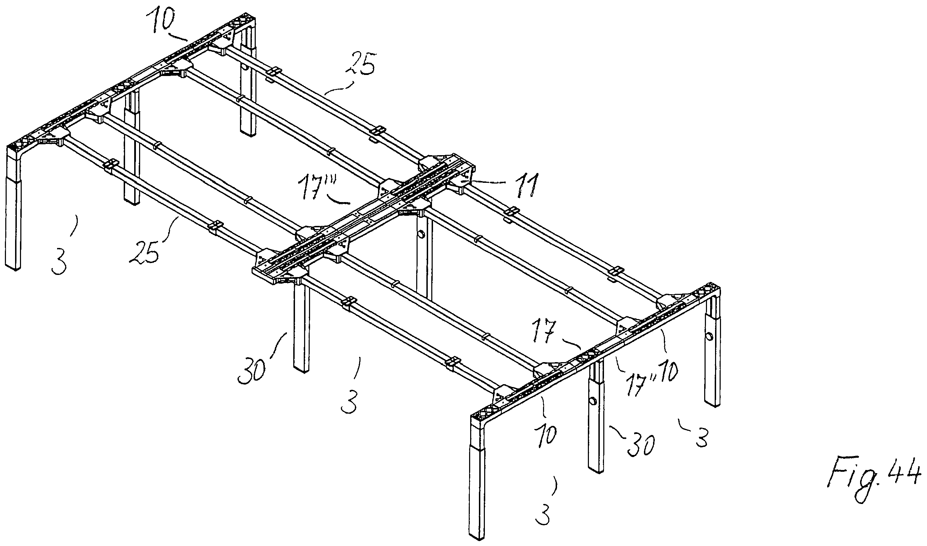

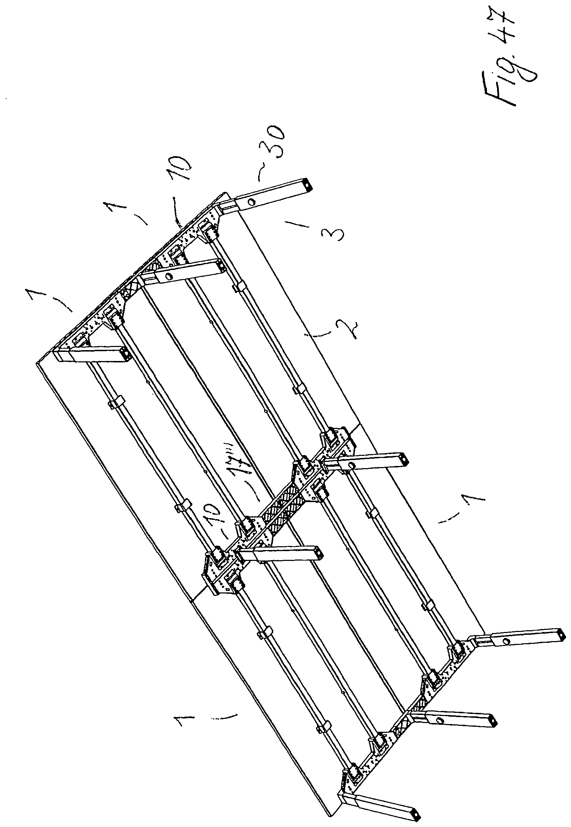

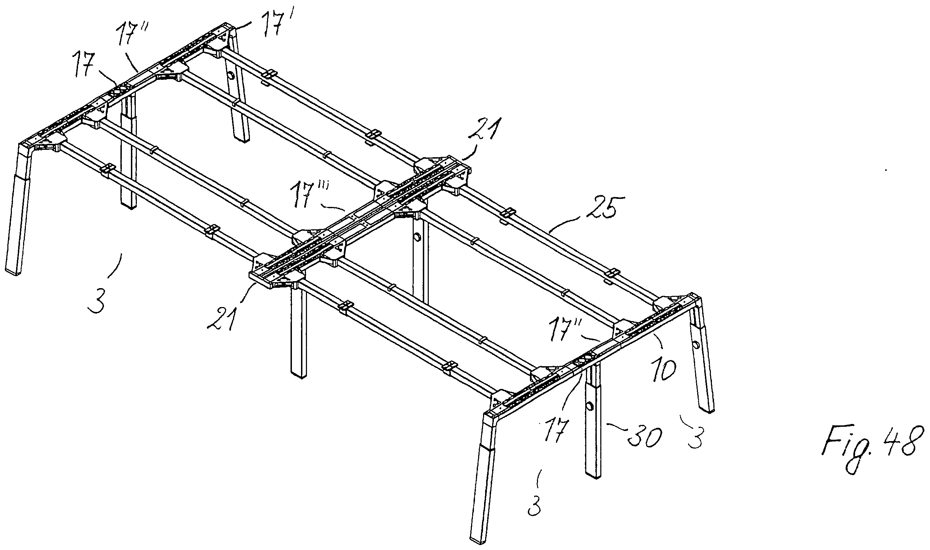

Die Quertraverse 10 bietet auch Verkettungsmöglichkeiten mindestens zweier Tische in Querrichtung, wie die Fig. 35 bis 41 zeigen und darüber hinaus die Verkettung von Gruppen aus in Querrichtung miteinander gekoppelten Tischen in Längsrichtung, wie die Fig. 42 bis 48 zeigen. Dabei werden wiederum die vorstehend beschriebenen Komponenten verwendet, die mit entsprechenden Bezugszeichen versehen sind. Ergänzend können zur Tischverkettung in Querrichtung weitere Koppelstücke 17" bzw. 17"' vorhanden sein, die keine nach unten gerichteten Aufnahmeschenkel für ein Tischbein 30 aufweisen, sondern lediglich als flache Befestigungsschenkel ausgebildet sind, wie die Fig. 37, 39, 40, 41, 44, 45 und 48 erkennen lassen.

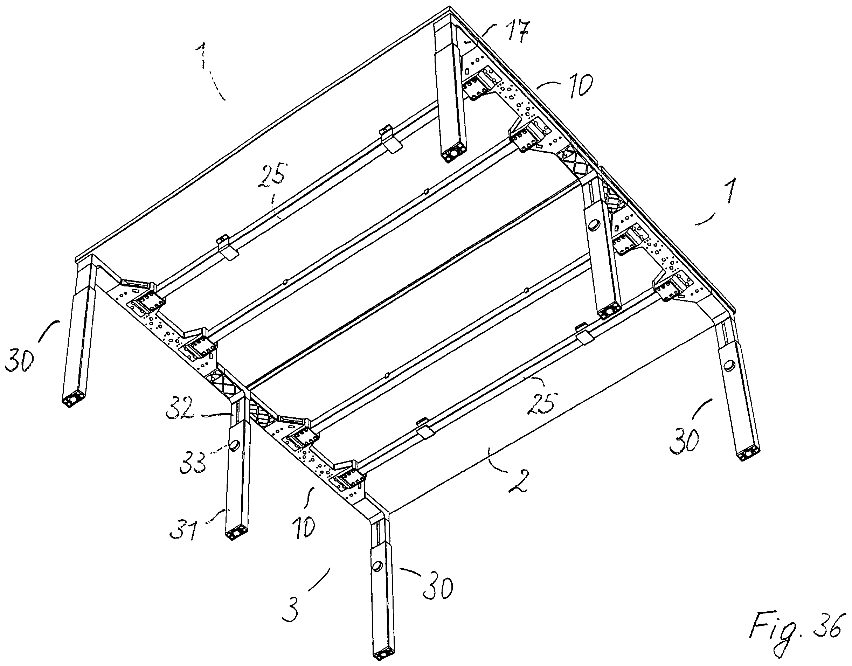

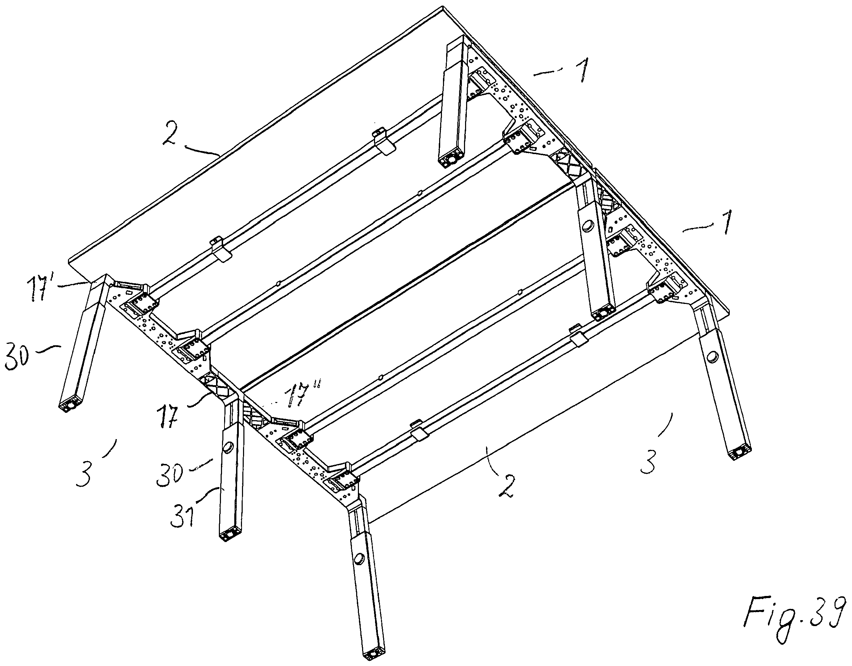

Die Fig. 35, 36 und 37 zeigen dabei zwei in Querrichtung mit ihren Tischgestellen 3 miteinander verkettete Tische 1, die eine U-Fußanordnung besitzen, d. h. mit Koppelelementen 17 ausgestattet sind, bei denen Befestigungsschenkel und Aufnahmeschenkel einen rechten Winkel bilden, wie vorstehend beschrieben. Im Verkettungsbereich unterhalb des Spaltes zwischen den aneinander grenzenden Tischen ist, wie die Fig. 36 und 37 zeigen, an dem einen Tisch ein erstes Koppelelement mit langem Befestigungsschenkel und rechtwinklig davon nach unten gerichtetem Aufnahmeschenkel in die betreffende Stirnseite der Quertraverse 10 eingesetzt, während in die Stirnseite der Quertraverse 10 des benachbarten Tisches ein Koppelelement 17" ohne Aufnahmeschenkel, sondern lediglich aus einem flachen Befestigungsschenkel eingesetzt ist, das mit seinem anderen Endabschnitt an dem ersteren Koppelstück 17 angebunden ist. Für die Anbindung kann dabei das erste Koppelstück 17 auf seiner Außenseite ähnliche Steckabschnitte aufweisen, wie sie in der Stirnseite der Quertraverse 10 vorgesehen sind, während die zugekehrte Außenseite des Koppelstücks 17" ohne Befestigungsschenkel entsprechende Steckzapfen aufweist, wie auf seiner der betreffenden Quertraverse 10 zugekehrten anderen Seite, mit denen es in die Koppelelemente 16 eingesteckt ist. Eine entsprechende Querverkettung kann auch bei der in den Fig. 39 bis 41 gezeigten Variante mit A-Fuß vorgesehen sein, wobei dabei der mittlere Fuß senkrecht nach unten gerichtet ist.

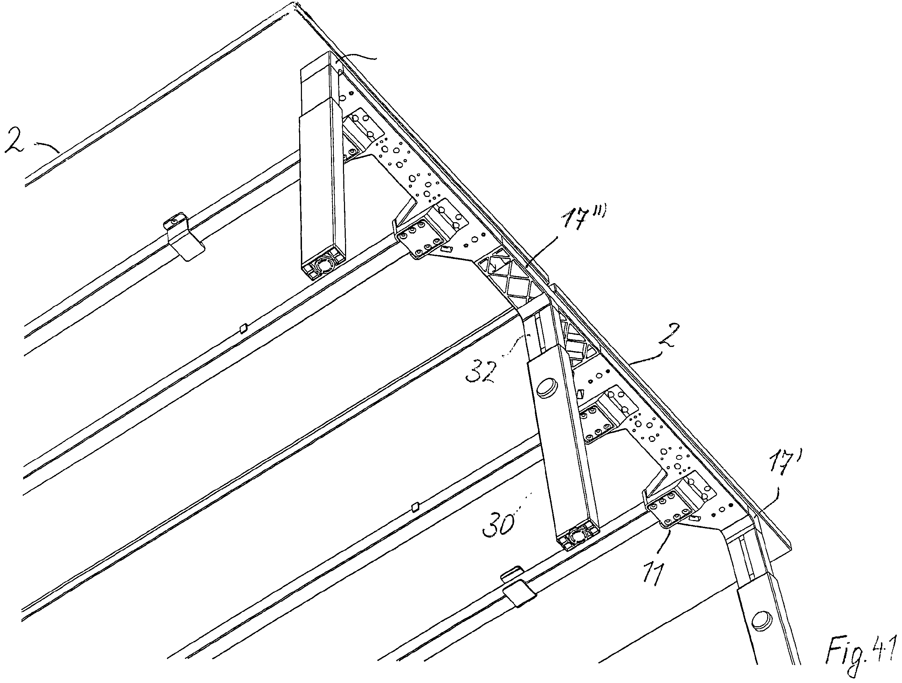

Wie Fig. 41 zeigt, kann zur Querverkettung alternativ ein sich über den Übergangsbereich zwischen den aneinander grenzenden Tischen auch ein durchgehendes Koppelstück 17"' verwendet werden, das auf seinen beiden Stirnseiten mit Koppelgegenelementen zum Einsetzen in die Koppelelemente 16 in der Stirnseite der jeweiligen Quertraverse 10 versehen ist. Außerdem weist dieses flache Koppelstück 17"' insbesondere in seinem mittleren Bereich Befestigungselemente z. B. in Form von Befestigungsbohrungen auf, um auf seiner Unterseite das dort angeordnete Tischbein 30 mit dessen oberem Beinabschnitt 32 stirnseitig zu befestigen. Auf diese Weise ergibt sich eine stabile Querverkettung mit einem Tischbein zur Abstützung beider aneinander grenzender Tischplatten 2.

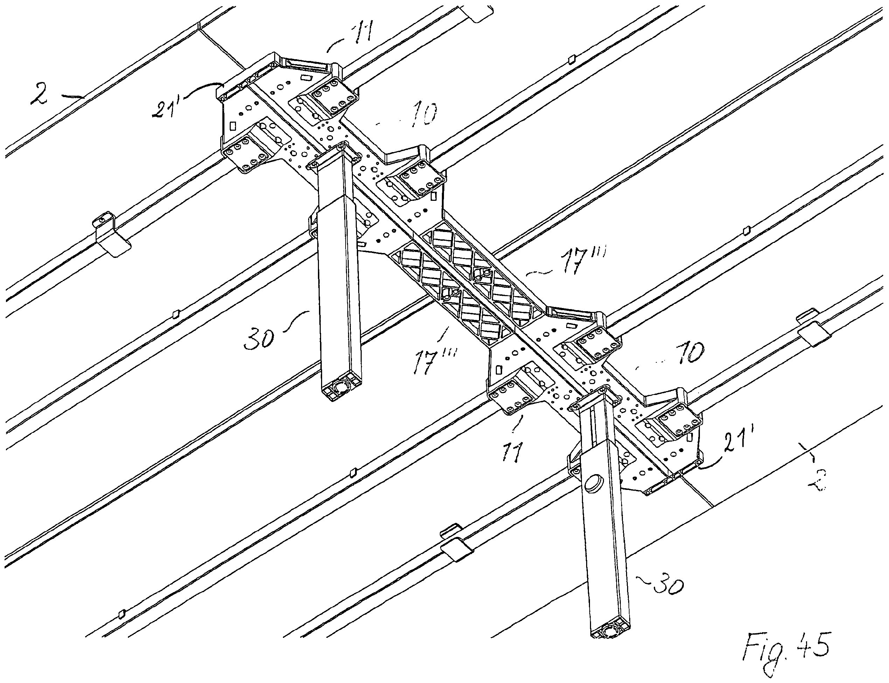

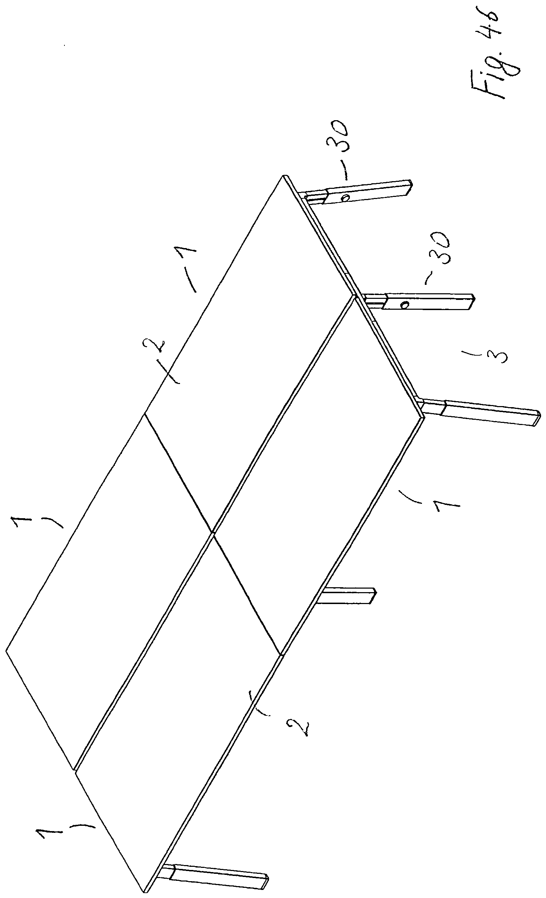

Die weiteren Fig. 42 bis 48 zeigen eine Längsverkettung von Gruppen aus zwei in Querrichtung miteinander gekoppelten Tischen 1, wobei die Fig. 42 bis 44 eine U-Fußanordnung zeigt, bei der sämtliche Tischbeine 30 senkrecht nach unten gerichtet sind, während die Fig. 46 bis 48 eine A-Fußvariante zeigen, bei der lediglich die mittleren Tischbeine 30 senkrecht nach unten gerichtet sind, während die unter den seitlichen freien Rändern der Tischplatten angeordneten Beine 30 schräg nach außen/unten gerichtet sind. Wie der Ausschnitt nach Fig. 45 zeigt, sind hierbei zur Querverkettung der Tische 1 unter dem Spalt zwischen den Tischen angeordnete durchgehende flache Koppelstücke 17"' ohne Aufnahmeschenkel vorhanden, die stirnseitig in die zugewandten Stirnseiten der betreffenden Quertraversen 10 eingesteckt und darin fixiert sind, wie vorstehend im Zusammenhang mit den Koppelstücken 17, 17' beschrieben. Dabei sind zwei parallel zueinander angeordnete Koppelstücke 17"' oder ein breites Koppelstück im Randbereich der jeweiligen Gruppe aus zwei quer verketteten Tischen 1 angeordnet, die in die betreffenden Quertraversen 10 der jeweiligen Tische eingesteckt sind. Zur Längsverkettung ist jeweils ein Tischbein zentral in Querrichtung unter den in Längsrichtung aneinander grenzenden Tischplatten angeordnet, wobei die Tischbeine 30 den Spalt zwischen den in Längsrichtung aneinander grenzenden Tischen 1 überbrücken und an den in Längsrichtung benachbarten Quertraversen 10 befestigt, insbesondere angeschraubt sind. Entsprechend könnte auch ein zentrales Bein im Kreuzungspunkt der Spalte zwischen den in Längsrichtung und in Querrichtung aneinander grenzenden Tischen unter dem Koppelstück 17"' befestigt sein.

Zudem sind an den äußeren freien Stirnseiten der Quertraversen 10, in die keine Koppelstücke eingesetzt sind, Abschlusskappen 21' eingesetzt, die sich bei der Ausführungsform nach Fig. 45 bei Anordnung mit Längsverkettung von Tischen 1 über beide Stirnseiten der in Längsrichtung benachbarten Quertraversen 10 erstrecken und in die darin vorgesehenen Koppelelemente 16 eingesteckt sein können. Auch dadurch kann eine fixierende Klammer für die Längsverkettung gebildet werden.

Aber auch lediglich in Querrichtung verkettete Tische 1 sind an den äußeren freien Stirnseiten der Quertraversen 10 mit einer jeweiligen Abschlusskappe 21 versehen, wenn dort kein Koppelstück 17, 17' eingesetzt ist.

Mit der Ausgestaltung der Quertraverse 10 ergeben sich auf einfache Weise unterschiedliche Konstellationsmöglichkeiten von Tischanordnungen, die auch leicht variiert, beispielsweise erweitert werden können. Aus relativ wenigen verschiedenen Komponenten wird ein Bausatz für variable Aufbaumöglichkeiten erhalten.

## Patentansprüche

1. Tischsystem mit einem eine längliche Tischplatte (2) tragenden Tischgestell (3), das zwei unter den schmalseitigen Endflächen der Tischplatte (2) angeordnete plattenartige Quertraversen (10) und mindestens eine zwischen diesen sich erstreckende und mit ihnen verbundene Längstraverse (25) sowie mindestens zwei an den Quertraversen (10) angebrachte Tischbeine (30) aufweist, wobei die Quertraversen (10) an ihren den Längsseiten der Tischplatte (2) zugekehrten Stirnseiten in ihren Endabschnitten (15) hohle oder zapfenförmige Koppelelemente (16) zum Einstecken von Koppelstücken (17, 17') mit an die Koppelelemente (16) angepassten komplementären zapfenförmigen oder hohlen Koppelgegenelementen (18) aufweisen, wobei die Tischbeine (30) über die Koppelstücke (17, 17') an den Quertraversen (10) angebracht oder anbringbar sind, wobei die Quertraversen (10) an jedem Endabschnitt (15) mindestens zwei sich in Längsrichtung der Quertraversen (10) parallel zueinander erstreckende Koppelelemente (16) und die Koppelstücke (17, 17') mindestens zwei zu diesen komplementäre Koppelgegenelemente (18) aufweisen und wobei die Quertraversen (10) zumindest auf ihrer nach außen zum schmalseitigen Ende des Tisches gekehrten Längsseite zumindest abschnittsweise gerade verlaufen,
**dadurch gekennzeichnet,**
**dass** der Abstand der Koppelelemente (16) in Querrichtung der Quertraverse (10) mindestens doppelt so groß ist wie der Abstand zwischen dem geraden Längsrand und dem benachbarten Koppelelement (16).

2. Tischsystem nach Anspruch 1,
**dadurch gekennzeichnet,**
**dass** die Koppelstücke (17, 17') einen sich in Verlängerung der Quertraversen (10) unter der Tischplatte (2) erstreckenden Befestigungsschenkel und einen gegenüber diesem rechtwinklig oder stumpfwinklig nach unten gerichteten Aufnahmeschenkel für einen oberen Beinabschnitt (32) des Tischbeins (30) aufweisen.

3. Tischsystem nach Anspruch 2,
**dadurch gekennzeichnet,**
**dass** der Befestigungsschenkel der stumpfwinkligen Koppelstücke (17') kürzer ist als der Befestigungsschenkel der rechtwinkligen Koppelstücke (17).

4. Tischsystem nach einem der vorhergehenden Ansprüche,
**dadurch gekennzeichnet,**
**dass** die Quertraversen (10) zur Aufnahme und Befestigung eines Tischbeines (30) auf ihrer Unterseite, insbesondere in zentraler Anordnung bezüglich der Längsrichtung der Quertraverse (10), ausgebildet sind.

5. Tischsystem nach einem der vorhergehenden Ansprüche,
**dadurch gekennzeichnet,**
**dass** auf den einander zugewandten Längsseiten der Quertraversen (10) eines Tischgestelles (3) mindestens ein abnehmbarer oder angeformter Befestigungsansatz (11) mit einer jeweiligen Befestigungsaufnahme (12) angebracht ist, in der ein zugeordneter Endteil einer Längstraverse (25) festgespannt oder festspannbar ist.

6. Tischsystem nach einem der vorhergehenden Ansprüche,
**dadurch gekennzeichnet,**
**dass** an den einander zugewandten Längsseiten der Quertraversen (10) und/oder den Befestigungsansätzen (11) angepasste Zwischenteile (14) angebracht oder anbringbar sind.

7. Tischsystem nach Anspruch 6,
**dadurch gekennzeichnet,**
**dass** an einem oder mehreren Zwischenteilen (14) mittels eines Halteelements (41) ein Anbauteil (40) angebracht oder anbringbar ist.

8. Tischsystem nach einem der vorhergehenden Ansprüche,
**dadurch gekennzeichnet,**
**dass** mehrere Tische (1) mit rechteckförmigen oder quadratischen Tischplatten (2) mit ihren Tischgestellen (3) aneinander gekettet sind, wobei in die stirnseitigen Koppelelemente (12) benachbarter Querbrücken (10) aneinandergrenzender Tische (1) ein den Übergang zwischen den einander zugekehrten Längsrändern der Querbrücken (10) überbrückendes Koppelstück (17, 17') mit seinen Koppelgegenelementen (18) eingesetzt ist und mit einem Tischbein (30) unter dem Übergangsbereich der aneinander grenzenden Tischplatten (2) verbunden ist.

9. Tischsystem nach einem der vorhergehenden Ansprüche,
**dadurch gekennzeichnet,**
**dass** mehrere Tische (1) mit rechteckförmigen Tischplatten (2) mit ihren Tischgestellen (3) aneinander gekettet sind, wobei auf der Unterseite benachbarter Querbrücken (10), den Übergang zwischen ihren einander zugekehrten Längsrändern überbrückend, mindestens jeweils ein Tischbein (3) angeordnet und mit beiden benachbarten Querbrücken (10) verbunden ist.

10. Tischsystem nach einem der vorhergehenden Ansprüche,
**dadurch gekennzeichnet,**
**dass** mehrere Tische (1) mit rechteckförmigen oder quadratischen Tischplatten (2) mit ihren Tischgestellen (3) in Querrichtung aneinander gekettet sind, wobei in die Stirnseiten in Querrichtung benachbarter Querbrücken (10) ein Koppelstück (17"') ohne Bein-Aufnahmeschenkel den Spalt zwischen den benachbarten Tischen (1) auf der Unterseite überbrückend eingesetzt ist, auf dessen Unterseite ein Tischbein (30) im Spaltbereich befestigt ist, oder
**dass** in der Stirnseite der Querbrücke (10) des einen Tisches (1) ein erstes Koppelstück (17) mit langem Befestigungsschenkel und Aufnahmeschenkel für ein Tischbein (30) und in der Stirnseite der Querbrücke (10) des anderen Tisches (1) ein Koppelstück (17) ohne Aufnahmeschenkel eingesetzt ist, das mit dem ersten Koppelstück (17) verbunden ist.

11. Tischsystem nach Anspruch 12,
**dadurch gekennzeichnet,**
**dass** eine Gruppe aus mindestens zwei in Querrichtung gekoppelten Tischen (1) mit einer weiteren Gruppe aus mindestens zwei in Querrichtung gekoppelten Tischen (1) in Längsrichtung mit ihren Tischgestellen (3) gemäß Anspruch 10 verkettet sind.

12. Bausatz für ein Tischsystem nach einem der vorhergehenden Ansprüche, bei dem zumindest mehrere Querbrücken (10), mehrere Koppelstücke (17, 17'), insbesondere in verschiedenen Ausführungen mit rechtwinkligen oder stumpfwinkligen Befestigungsschenkeln und Aufnahmeschenkeln, mehrere Tischbeine (30) zur seitlichen oder zentralen Anbringung und mehrere Längstraversen (25) vorhanden sind, wobei die Quertraversen (10), die Koppelstücke (17, 17'), die Tischbeine (30) und die Längstraversen (25) die in Anspruch 1 angegebenen Merkmale aufweisen.

## Claims

1. A table system having a table frame (3) which supports an elongate table top (2) and has two plate-like transverse members (10) arranged below the narrow-side ends of the table top (2) and at least one longitudinal member (25) extending between the transverse members and connected thereto and at least two table legs (30) affixed to the transverse members (10) wherein on their end faces facing the long sides of the table top (2) the transverse members (10) have in their end portions (15) hollow or lug-like coupling elements (16) for insertion of coupling pieces (17, 17') with lug-like or hollow coupling counter-elements (18) adapted in a complementary manner to the coupling element (16), wherein the table legs (30) are or can be affixed by means of the coupling pieces (17, 17') to the transverse members (10), wherein the transverse members (10) have on each end portion (15) at least two coupling elements (16) extending parallel to one another in the longitudinal direction of the transverse members (10) and the coupling pieces (17, 17') have at least two coupling counter-elements (18) complementary thereto, and wherein the transverse members (10) extend at least partially in a straight line at least on their long side facing outwards towards the narrow-side end of the table,
**characterized in that**
the spacing of the coupling elements (16) in transverse direction of the transverse member (10) is at least twice as great as the spacing between the straight long edge and the adjacent coupling element (16).

2. The table system according to claim 1,
**characterized in that**
the coupling pieces (17, 17') have a fastening arm extending in an extension of the transverse members (10) below the table top (2) and a receiving arm directed downwards at a right angle or obtuse angle thereto for an upper leg portion (32) of the table leg (30).

3. The table system according to claim 2,
**characterized in that**
the fastening arm of the obtuse-angled coupling pieces (17') is shorter than the fastening arms of the right-angled coupling pieces (17).

4. The table system according to one of the preceding claims,
**characterized in that**
the transverse members (10) are designed to receive and fasten a table leg (30) on their underside, in particular in a central arrangement with respect to the longitudinal direction of the transverse member (10).

5. The table system according to one of the preceding claims,
**characterized in that**
on the mutually facing long sides of the transverse members (10) of a table frame (3) at least one removable or integral fastening attachment (11) with a respective fastening receptacle (12) is mounted, in which an associated end part of a longitudinal member (25) is or can be clamped.

6. The table system according to one of the preceding claims,
**characterized in that**
adapted intermediate parts (14) are or can be affixed to the mutually facing long sides of the transverse members (10) and/or the fastening attachments (11).

7. The table system according to claim 6,
**characterized in that**
an accessory (40) is or can be affixed to one or more intermediate parts (14) by means of a retaining element (41).

8. The table system according to one of the preceding claims,
**characterized in that**
a plurality of tables (1) with rectangular or square table tops (2) are linked to one another by their table frames (3), wherein in the coupling elements (12), at the end faces of adjacent transverse bridges (10) of adjoining tables (1), a coupling piece (17, 17') which bridges the transition between the mutually facing long edges of the transverse bridges (10) is inserted with its coupling counter-elements (18) and is connected to a table leg (30) below the transition region of the table tops (2) which adjoin one another.

9. The table system according to one of the preceding claims,
**characterized in that**
a plurality of tables (1) with rectangular or square table tops (2) are linked to one another by their table frames (3), wherein on the underside of adjacent transverse bridges (10), bridging the transition between their mutually facing long edges, at least one table leg (3) is arranged and is connected to the two adjacent transverse bridges (10).

10. The table system according to one of the preceding claims,
**characterized in that**
a plurality of tables (1) with rectangular or square table tops (2) are linked to one another by their table frames (3) in the transverse direction, wherein a coupling piece (17"') without leg-receiving arms is inserted into the end faces in the transverse direction of adjacent transverse bridges (10) and bridges the gap between the adjacent tables (1) on the underside, on the underside of which a table leg (30) is fastened in the gap region, or
that a first coupling piece (17) with a long fastening arm and receiving arm for a table leg (30) is inserted in the end face of the transverse bridge (10) of one table (1), and a coupling piece (17) which is connected to the first coupling piece (17) and has no receiving arm is inserted in the end face of the transverse bridge (10) of the other table (1).

11. The table system according to claim 12,
**characterized in that**
a group of at least two tables (1) coupled in the transverse direction to a further group of at least two tables (1) coupled in the transverse direction are linked in the longitudinal direction by their table frames (3) according to claim 10.

12. A kit for a table system according to one of the preceding claims, wherein at least a plurality of transverse bridges (10), a plurality of coupling pieces (17, 17'), in particular in different configurations with right-angled or obtuse-angled fastening arms and receiving arms, a plurality of table legs (30) for lateral or central attachment and a plurality of longitudinal members (25) are provided, wherein the transverse members (10), the coupling pieces (17, 17'), the table legs (30) and the longitudinal members (25) have the features set out in claim 1.

## Revendications

1. Système de table doté d'un bâti (3) supportant un plateau de table (2) longitudinal, qui présente deux traverses transversales (10) de type plaque disposées sous les faces d'extrémité de chant du plateau de table (2) et au moins une traverse longitudinale (25) s'étendant entre celles-ci et reliées à elles ainsi qu'au moins deux pieds de table (30) fixés sur les traverses transversales (10), dans lequel les traverses transversales (10) présentent sur leurs faces frontales tournant le dos aux faces longitudinales du plateau de table (2), dans leurs sections terminales (15), des éléments de liaison (16) creux ou en forme de chevilles pour l'insertion de pièces de liaison (17, 17') avec des contre-éléments de liaison (18) en forme de chevilles ou creux complémentaires adaptés aux éléments de liaison (16), dans lequel les pieds de table (30) sont fixés ou sont fixables aux traverses transversales (10) via les pièces de liaison (17, 17'), dans lequel les traverses transversales (10) présentent sur chaque section terminale (15) au moins deux éléments de liaison (16) s'étendant parallèlement l'un à l'autre en direction longitudinale des traverses transversales (10) et les pièces de liaison (17, 17') présentent au moins deux contre-éléments de liaison (18) complémentaires par rapport à ceux-ci et dans lequel les traverses transversales (10) vont en ligne droite, au moins sur leur face longitudinale tournée vers l'extérieur vers l'extrémité de chant, au moins par passages,
**caractérisé en ce que**,
l'écart des éléments de liaison (16) en direction transversale de la traverse transversale (10) est au moins deux fois plus grand que l'écart entre le bord longitudinal droit et l'élément de liaison (16) voisin.

2. Système de table selon la revendication 1,
**caractérisé en ce que**
les pièces de liaison (17, 17') présentent une branche de fixation s'étendant sous le plateau de table (2) dans le prolongement des traverses transversales (10) et une branche de réception dirigée vers le bas à angle droit ou à angle obtus par rapport à celle-ci, pour une section de pied supérieure (32) du pied de table (30).

3. Système de table selon la revendication 2,
**caractérisé en ce que**
la branche de fixation des pièces de liaison (17') à angle obtus est plus courte que la branche de fixation des pièces de liaison (17) à angle droit.

4. Système de table selon l'une quelconque des revendications précédentes,
**caractérisé en ce que**
les traverses transversales (10) sont façonnées pour réceptionner et fixer un pied de table (30) sur leur face inférieure, notamment en disposition centrale par rapport à la direction longitudinale de la traverse transversale (10).

5. Système de table selon l'une quelconque des revendications précédentes,
**caractérisé en ce que**
sur les faces longitudinales des traverses transversales (10) tournées l'une vers l'autre d'un bâti de table (3), au moins un appendice de fixation (11) amovible ou formé est fixé avec un logement de fixation (12) respectif, dans lequel une partie d'extrémité attribuée d'une traverse longitudinale (25) est attachée ou attachable.

6. Système de table selon l'une quelconque des revendications précédentes,
**caractérisé en ce que**
des parties intermédiaires (14) adaptées sont fixées ou fixables sur les faces longitudinales des traverses transversales (10) tournées l'une vers l'autre et/ou sur les appendices de fixation (11).

7. Système de table selon la revendication 6,
**caractérisé en ce que**
une partie de montage (40) est fixée ou fixable sur une ou plusieurs partie(s) intermédiaire(s) (14) à l'aide d'un élément de support (41).

8. Système de table selon l'une quelconque des revendications précédentes,
**caractérisé en ce que**
plusieurs tables (1) dotées de plateaux de table (2) de forme rectangulaire ou carrée sont raccordées entre elles avec leurs bâtis de table (3), dans lequel, dans les éléments de liaison (12) frontaux des traverses (10) voisines de tables (1) contigües, une pièce de liaison (17, 17') chevauchant le passage entre les bords longitudinaux tournés l'un vers l'autre des traverses (10) est utilisée avec son contre-élément de liaison et reliée avec un pied de table (30) sous l'espace de passage des plateaux de table (2) contigus.

9. Système de table selon l'une quelconque des revendications précédentes,
**caractérisé en ce que**
plusieurs tables (1) dotées de plateaux de table (2) de forme rectangulaire sont raccordées entre elles avec leurs bâtis de table (3), dans lequel, sur le côté inférieur de traverses voisines (10), au moins un pied de table (3) est disposé et relié avec deux traverses (10) voisines, chevauchant le passage entre leurs bords longitudinaux.

10. Système de table selon l'une quelconque des revendications précédentes,
**caractérisé en ce que**
plusieurs tables (1) dotées de plateaux de table (2) de forme rectangulaire ou carrée sont raccordées entre elles avec leurs bâtis de table (3) en direction transversale, dans lequel, dans les côtés frontaux en direction transversale de traverses (10) voisines, une pièce de liaison (17") sans branche de réception de pied est utilisée en chevauchement de la fente entre les tables (1) voisines sur le côté inférieur, sur le côté inférieur duquel un pied de table (30) est fixé au niveau de la fente, ou
sur le côté frontal de la traverse (10) de l'une table (1), une première pièce de liaison (17) dotée d'une longue branche de fixation et d'une longue branche de réception est utilisée pour un pied de table (30) et une pièce de liaison (17) sans branche de réception est utilisée dans le côté frontal de la traverse (10) de l'autre table (1), qui est relié à la première pièce de liaison (17).

11. Système de table selon la revendication 12,
**caractérisé en ce que**
un groupe d'au moins deux tables (1) couplées en direction transversale est attaché à un autre groupe d'au moins deux tables couplées en direction transversale par leurs bâtis de table (3) conformément à la revendication 10.

12. Kit pour un système de table selon l'une quelconque des revendications précédentes, pour lequel on dispose au moins de plusieurs traverses (10), de plusieurs pièces de liaison (17, 17'), notamment en différentes versions avec des branches de fixation et des branches de réception à angle droit ou obtus, de plusieurs pieds de table (30) pour une adjonction latérale ou centrale, et de plusieurs traverses longitudinales (25), dans lequel les traverses transversales (10), les pièces de liaison (17, 17'), les pieds de table (30) et les traverses longitudinales (25) présentent les caractéristiques indiquées dans la revendication 1.
